# EUROPEAN PATENT APPLICATION

(11) **EP 4 741 693 A1**
(43) Date of publication of application: **13.05.2026**
(21) Application number: 25175115.2
(22) Date of filing: 08.05.2025
(51) Int. Cl.: F16K 15/14, F16K 15/20

(54) **AIR VALVE, AIR VALVE ASSEMBLY, AND INFLATABLE PRODUCT**

(30) Priority: 08.11.2024 CN 202422739573 U; 18.12.2024 CN 202423136765 U
(71) Applicant: Bestway Inflatables & Material Corp., Shanghai 201812 (CN)
(72) Inventor: ZENG, Xianglin, SHANGHAI,, 201812 (CN); SONG, Qingshui, SHANGHAI, 201812 (CN)
(74) Representative: Inchingalo, Simona

(57) **Abstract**

The present invention discloses an air valve (200), an air valve assembly, and an inflatable product. The air valve includes: a valve body (201); a valve seat (202) connected to the valve body to form a fluid channel (205); a first sealing member (204) arranged between the valve body and the valve seat; and a valve core (203) including air vents (2031) in communication with the fluid channel, the valve core being rotatably arranged in the fluid channel relative to the valve seat and being surrounded by the first sealing member, so as to switch the valve core between a first position and a second position, where in the first position, the valve core is in contact with an inner wall (2051) of the fluid channel, and the first sealing member is in contact with the valve core and seals the valve core against the inner wall of the fluid channel; and in the second position, the valve core is spaced apart from the inner wall of the fluid channel, and the first sealing member surrounds the valve core and is spaced apart from the valve core. The present invention can stabilize a sealing effect.

## Description

### Technical Field

The present invention relates to the field of air passage devices, and in particular to an air valve, an air valve assembly, and an inflatable product.

### Background Art

In the market there are already several existing products including inflatable mattresses and air valves applied to the inflatable mattresses. With the improvement of people's requirements for quality of life, people have increasing demands for inflatable products, in particular inflatable mattresses and inflatable sponge mattresses.

The existing products present some problems and drawbacks that should be overcome to improve the quality, the usability and performance of such inflatable products. An important part of an inflatable product is its air valve. Although the existing air valve can seal the inflatable product and can be connected to an air pump for inflating the inflatable product, the air valve may have poor sealing performance.

In order to prevent a user from having to replenish the inflatable product with air multiple times during use, an air valve with good sealing performance, which is applied to an inflatable mattress (for example, a TPU inflatable sponge mattress, i.e., an inflatable mattress made of a thermoplastic polyurethane (TPU) material), has emerged accordingly.

Furthermore, other drawbacks of the known inflatable product, always related to their air valves, occur when the inflatable product is deflated: air usually doesn't exit easily and flows back into the inflatable product, resulting in the difficulty to completely discharge the air from inside the inflatable mattress. As a result, the user needs a large space to store the inflatable product when this product is not used.

### Summary

The present invention aims to solve the problem of poor sealing performance of existing air valves. The present invention provides an air valve, an air valve assembly, and an inflatable product, which can stabilize a sealing effect.

In order to solve the above-described technical problem, an embodiment of the present invention discloses an air valve, including:
a valve body;
a valve seat connected to the valve body to form a fluid channel;
a first sealing member arranged between the valve body and the valve seat; and
a valve core including air vents in communication with the fluid channel, the valve core being rotatably arranged in the fluid channel relative to the valve seat and being surrounded by the first sealing member, so as to switch the valve core between a first position and a second position,
where in the first position, the valve core is in contact with an inner wall of the fluid channel, and the first sealing member is in contact with the valve core and seals the valve core against the inner wall of the fluid channel; and
in the second position, the valve core is spaced apart from the inner wall of the fluid channel, and the first sealing member surrounds the valve core and is spaced apart from the valve core.

With the above technical solution, the valve body is connected to the valve seat to form the fluid channel, and the valve core includes the air vents and is in communication with the fluid channel, such that in the first position, the valve core is in contact with the inner wall of the fluid channel, the air vents are in communication with the fluid channel to allow an outside fluid to flow in the fluid channel, and the first sealing member also seals a gap between the valve core and the inner wall of the fluid channel, preventing the fluid from flowing into or out of the gap between the valve core and the inner wall of the fluid channel, and thus ensuring a sealing effect. Moreover, the first sealing member surrounds the valve core and is located between the valve body and the valve seat, which can stabilize the first sealing member, thereby preventing the first sealing member from falling off, which would otherwise cause sealing failure and affect a flow track of the fluid.

In the second position, the valve core is spaced apart from the inner wall of the fluid channel, and the first sealing member surrounds the valve core and is spaced apart from the valve core. In this case, the fluid channel is not blocked by the valve core so that the fluid channel opens and is in a maximum fluid-flow state, facilitating the inflow or outflow of the fluid and enabling the rapid inflow and outflow of the fluid. During switching of the valve core from the first position to the second position, a user may rotate the valve core to change the size of an opening of the fluid channel, thus adjusting an inflation/deflation speed.
At least one rib is provided on a side of the first sealing member facing the valve core, and the at least one rib is spaced apart in a circumferential direction. In the first position, the at least one rib abuts against the valve core; and in the second position, the at least one rib surrounds the valve core and is spaced apart from the valve core.

With the above technical solution, in the first position, a plurality of ribs abut against the valve core, so that a friction force between the first sealing member and the valve core can be reduced, facilitating the rotation of the valve core in the fluid channel, and thus facilitating the switching of the valve core between the first position and the second position.

The valve core is capable of 360-degree omnidirectional rotation within the fluid channel, enabling unrestricted multi-axis movement centered at a central axis of the valve core.

An inner wall of the valve body protrudes to form a first connecting portion; the valve seat includes a first main body portion which is internally hollow and is connected to the valve body to form the fluid channel. Furthermore, the first main body portion extends in an axial direction, such that the first main body portion and the first connecting portion are arranged opposite each other and spaced apart in the axial direction and form an accommodating space together with the inner wall of the valve body; the first sealing member is located in the accommodating space.

A hook is provided at a top end of the inner wall of the valve body in the axial direction; the hook and the first connecting portion are spaced apart in the axial direction, a mounting portion is provided on an outer wall of the first main body portion, and the mounting portion is configured for connection to the hook in a snap-fit manner to connect the valve seat to the valve body and clamp the first sealing member in the accommodating space.

With the above technical solution, the valve body and the valve seat are connected together by means of a hook-fastening structure of a hook and the mounting portion, so that the first sealing member can be clamped in the accommodating space, preventing the first sealing member from falling off, which would otherwise affect the sealing effect.

An outer periphery of the first main body portion protrudes outwardly to form a first abutting portion, and the first abutting portion is configured for connection to the inflatable main body.

The first abutting portion is annular.

An outer periphery of the first main body portion protrudes outwardly to form a second abutting portion, the second abutting portion axially extends in a direction close to the valve body and is spaced apart from the first main body portion in a radial direction to form an annular groove, and the annular groove is configured to accommodate the valve body and is in threaded fit with an outer wall of the valve body to clamp the first sealing member in the accommodating space.

With the above technical solution, the valve body and the valve seat are connected by means of threads, so that the first sealing member can be clamped in the accommodating space, preventing the first sealing member from falling off, which would otherwise affect the sealing effect.

A projection of the second abutting portion in the axial direction includes a first straight segment, a first circular arc segment, a second straight segment, a third straight segment, a second circular arc segment and a fourth straight segment that are connected to each other.

A plurality of supports are provided on a side of the valve body away from the valve seat, the plurality of supports are spaced apart in a circumferential direction to form a plurality of air outlet through holes, and the plurality of air outlet through holes are in communication with the fluid channel.

Eight supports are provided, one end of each of the supports extends toward the valve seat and is connected to the first connecting portion, the other end thereof is connected by means of a second connecting portion, and the second connecting portion is located at a bottom end of the valve body.

The air valve further includes a valve cap which is threadedly connected to the valve seat.

Furthermore, the valve cap includes a first portion and a second portion, the first portion and the second portion being spaced apart in a radial direction to form a connecting groove, and the connecting groove being configured to accommodate the valve seat and being threadedly connected to the valve seat.

The first portion of the valve cap is internally hollow and is in communication with the fluid channel; a plurality of reinforcing ribs are provided inside the first portion of the valve cap, and the plurality of reinforcing ribs are spaced apart in a circumferential direction.

With the above technical solution, the provision of the reinforcing ribs can enhance the stiffness of the valve cap, improving the sealing effect of the air valve after the valve cap and valve seat are connected.

A second sealing member is provided in the connecting groove to enable a sealed connection between the valve cap and the valve seat.

The valve core is provided with a plurality of baffle plates, the plurality of baffle plates are spaced apart in a circumferential direction to form the air vent, one end of each of the plurality of baffle plates is connected to an inner wall of the valve core, and the other end thereof is connected to a third connecting portion.

Each of the baffle plates is straight, or each of the baffle plates is arc-shaped.

At least a part of an inner wall of each air vent is provided with a stopper, and the stopper extends toward the air vent.

The stopper is an annular block, one side of the stopper is connected to the inner wall of the air vent, and the other side thereof extends toward the air vent.

A plurality of stoppers are provided, and the plurality of stoppers are spaced apart in the circumferential direction.

Advantageously, the stopper is arranged at the bottom, middle or top of the inner wall of the air vent in an axial direction.

Preferably, the stopper is integrally formed with the valve core.

Preferably, the stopper extends toward a through hole with a length of 1.5 mm to 4 mm and extends in the circumferential direction with a width of 1.5 mm to 4 mm.

The air valve further includes a valve diaphragm which is located on a side of the valve core facing the valve body; the valve diaphragm is connected to the valve core by means of a connecting rod and covers the air vents.

The third connecting portion of the valve core is provided with a through hole through which the connecting rod, connecting the valve diaphragm to the valve core, passes to be connected to the valve core.

Preferably, the valve seat has an outer diameter of 40 mm to 120 mm, the valve body has an outer diameter of 30 mm to 110 mm, the valve diaphragm has an outer diameter of 18 mm to 108 mm, and the valve core has an outer diameter of 20 mm to 100 mm.

Preferably, the valve core has an inner diameter of 16 mm to 96 mm, the valve core has a thickness of greater than 3 mm, and the valve diaphragm has a thickness of 0.5 mm to 10 mm.

Preferably, a force for turning the valve core to rotate relative to the valve seat is less than 0.5 N.

According to a further embodiment of the present invention, it is further disclosed an air valve, including:
a valve body;
a valve seat connected to the valve body to form a fluid channel;
a valve core including air vents, the valve core being located in the fluid channel, the air vents being in communication with the fluid channel, and the valve core being rotatably connected to the fluid channel to switch the valve core between a first position and a second position; and
a first sealing member surrounding the valve core and integrally formed with the valve core,
where in the first position, the valve core is in contact with an inner wall of the fluid channel, and the first sealing member is in contact with the inner wall of the fluid channel and seals the valve core against the inner wall of the fluid channel; and in the second position, the valve core is spaced apart from the inner wall of the fluid channel, and the first sealing member is spaced apart from the inner wall of the fluid channel.

With the above technical solution, the valve body is connected to the valve seat to form the fluid channel, and the valve core includes the air vents and is in communication with the fluid channel, such that in the first position, the valve core is in contact with the inner wall of the fluid channel, the air vents are in communication with the fluid channel to allow an outside fluid to flow in the fluid channel, and the first sealing member also seals a gap between the valve core and the inner wall of the fluid channel, preventing the fluid from flowing into or out of the gap between the valve core and the inner wall of the fluid channel, and thus ensuring a sealing effect. Moreover, the first sealing member is integrally formed with the valve core, so that the first sealing member can be stably arranged on the valve core, thereby preventing the first sealing member from falling off, which would otherwise cause sealing failure and affect a flow track of the fluid.

In the second position, the valve core is spaced apart from the inner wall of the fluid channel, and the first sealing member is spaced apart from the inner wall of the fluid channel. In this case, the fluid channel is not blocked by the valve core so that the fluid channel opens and is in a maximum fluid-flow state, facilitating the inflow or outflow of the fluid and enabling the rapid inflow and outflow of the fluid. During switching of the valve core from the first position to the second position, a user may rotate the valve core to change the size of an opening of the fluid channel, thus adjusting an inflation/deflation speed.

Advantageously, at least one rib is provided on a side of the first sealing member facing the fluid channel, and the at least one rib is spaced apart in a circumferential direction. In the first position, the at least one rib abuts against the inner wall of the fluid channel; and in the second position, the at least one rib is spaced apart from the inner wall of the fluid channel.

With the above technical solution, in the first position, the at least one rib abuts against the inner wall of the fluid channel, so that a friction force between the first sealing member and the inner wall of the fluid channel can be reduced, facilitating the rotation of the valve core in the fluid channel, and thus facilitating the switching of the valve core between the first position and the second position.

The present invention further discloses an air valve assembly, including:
an air valve of any one of the embodiments as described above; and
a connector having a second channel for a fluid to pass through, the fluid channel being in communication with the second channel, one end of the connector being connected to the valve seat, and the other end thereof being configured for connection to an external apparatus.

The connector of the air valve assembly includes a connector body extending in an axial direction and being internally hollow to form the second channel; the connector body includes a first end and a second end that are arranged opposite each other in the axial direction, the first end being provided with a recess for abutting against the external apparatus, and the second end being provided with a thread and being threadedly connected to the valve seat.

A protruding portion is provided on a side wall of the connector body close to the second end, and the protruding portion surrounds the side wall of the connector body and is located at the top of the valve seat.

The connector includes a connector body and a protruding portion; the connector body extends in an axial direction, and the connector body is internally hollow to form the second channel; the connector body includes a first end and a second end that are arranged opposite each other in the axial direction, the first end being configured for connection to the external apparatus to insert the external apparatus into the second channel, and the second end being provided with a thread and being threadedly connected to the valve seat; and the protruding portion surrounds an outer periphery of the first end and is located at the top of the valve seat.

The present invention further discloses an inflatable product comprising: an inflatable main body including an inflatable chamber; and an air valve of any one of the implementations as described above, the valve seat being connected to the inflatable main body such that the valve body is located in the inflatable chamber.

### Brief Description of the Drawings

Fig. 1 shows a schematic structural diagram of one of inflatable products according to an embodiment of the present invention;
Fig. 1A shows a first schematic structural diagram of an inflatable main body according to an embodiment shown and described herein;
Fig. 1B shows a second schematic structural diagram of an inflatable main body according to an embodiment shown and described herein;
Fig. 1C shows a third schematic structural diagram of an inflatable main body according to an embodiment shown and described herein;
Fig. 1D shows a fourth schematic structural diagram of an inflatable main body according to an embodiment shown and described herein;
Fig. 1E shows a fifth schematic structural diagram of an inflatable main body according to an embodiment shown and described herein;
Fig. 2 shows a cross-sectional view of an air valve in Fig. 1;
Fig. 3 shows a first perspective structural view of an air valve according to an embodiment shown and described herein;
Fig. 4 shows an exploded view of an air valve according to an embodiment shown and described herein;
Fig. 5 shows a second perspective structural view of an air valve according to an embodiment shown and described herein, showing a valve cap of the air valve being in an open state;
Fig. 6 shows a first schematic cross-sectional view of an air valve according to an embodiment shown and described herein, showing ribs being provided on an edge of a first sealing member;
Fig. 6A shows a first perspective structural view of a valve seat according to an embodiment shown and described herein, showing a form of a mounting portion;
Fig. 6B shows a second perspective structural view of a valve seat according to an embodiment shown and described herein, showing another form of a mounting portion;
Fig. 7 shows a schematic diagram of an air valve in a first position according to an embodiment shown and described herein, showing a valve core of the air valve being in an inflation state;
Fig. 7A shows a perspective view of a first type of connector according to an embodiment shown and described herein;
Fig. 7B shows a cross-sectional view of a first type of air valve assembly according to an embodiment shown and described herein;
Fig. 7C shows a perspective view of a second type of connector according to an embodiment shown and described herein;
Fig. 7D shows a cross-sectional view of a second type of air valve assembly according to an embodiment shown and described herein;
Fig. 8 shows a schematic diagram of an air valve in a first position according to an embodiment shown and described herein, showing a valve core of the air valve being in a deflation state;
Fig. 9 shows a schematic diagram of an air valve in a second position according to an embodiment shown and described herein, showing a state of a valve core of the air valve during rapid deflation or inflation;
Fig. 10 shows a second schematic cross-sectional view of an air valve according to an embodiment shown and described herein, showing a first sealing member of a rubber-coated structure, and showing a valve cap of the air valve being connected to a valve seat by a thread on the valve cap mating with an external thread provided at an end of the valve seat;
Fig. 10A shows a schematic structural diagram of one of valve cores used in Fig. 10;
Fig. 11 shows a third schematic cross-sectional view of an air valve according to an embodiment shown and described herein, showing a valve cap of the air valve being connected to a valve seat by a thread on the valve cap mating with an internal thread provided at an end of the valve seat, and showing the valve core shown in Fig. 10;
Fig. 12 shows a perspective structural view of an air valve according to another embodiment shown and described herein;
Fig. 13 shows a first schematic cross-sectional view of an air valve according to another embodiment shown and described herein, showing ribs being provided on an edge of a seal ring, and showing a valve cap of the air valve being connected to a valve seat by a thread on the valve cap mating with an external thread provided at an end of the valve seat;
Fig. 14 shows a second schematic cross-sectional view of an air valve according to another embodiment shown and described herein, showing a cross section of a valve seat of the air valve being connected to a valve body by means of threads;
Fig. 15 shows a third schematic cross-sectional view of an air valve according to another embodiment shown and described herein, showing a seal ring of a rubber-coated structure, and showing a valve cap of the air valve being connected to a valve seat by a thread on the valve cap mating with an external thread provided at an end of the valve seat;
Fig. 16 shows a fourth schematic cross-sectional view of an air valve according to another embodiment shown and described herein, showing a cross section of the valve seat shown in Fig. 15 being connected to a valve body by means of threads, and showing a valve core shown in Fig. 15;
Fig. 17 shows a first schematic structural diagram of a valve core according to still another embodiment shown and described herein;
Fig. 18 shows a second schematic structural diagram of a valve core according to still another embodiment shown and described herein, showing two separate stoppers being provided on an edge of each air vent of the valve core;
Fig. 19 shows a third schematic structural diagram of a valve core according to still another embodiment shown and described herein, showing air vents of the valve core being divided into four equal parts in a fan shape, with a separate stopper provided in each air vent of the valve core;
Fig. 20 shows a fourth schematic structural diagram of a valve core according to still another embodiment shown and described herein, showing a baffle plate being arc-shaped; and
Fig. 21 shows a schematic diagram of the air valve shown in Fig. 5 with the valve cap removed.

### Detailed Description

The implementation and application of embodiments of an air valve, air valve assembly, and inflatable product will be discussed in detail below. However, it should be understood that the embodiments discussed and illustrated herein illustratively described various embodiments, implementations, and applications of the present disclosure, and are not intended to limit the scope of the present disclosure. To provide a deep understanding of the present invention, the following description includes many specific details. The present invention may also be implemented without these details. In addition, in order to avoid confusing or obscuring key points of the present invention, some specific details are omitted in the description. It should be noted that the embodiments and the features thereof in the present invention can be combined with each other without conflicts.

It should be noted that in the specification, like reference numerals and letters denote like items in the following drawings. Therefore, once an item is defined in one of the drawings, it is not necessary to further define and explain the item in the subsequent drawings.

In the description of the embodiments, it should be noted that the orientation or position relationships indicated by the terms, such as "upper", "lower", "inner" and "bottom", are based on the orientation or position relationships shown in the drawings or the orientation or position relationships in which a product of the present invention is customarily placed during use, and are only intended to facilitate description of the present invention and simplify the description, rather than indicating or implying that the device or element indicated must have a specific orientation or be configured and operated in a specific orientation, and thus cannot be construed as limiting the present invention.

The terms "first", "second", etc. are only intended to distinguish the description, and should not be construed as indicating or implying the relative importance.

In the description, unless expressly stated or limited otherwise, the terms such as "arrange", "connect", and "connection" should be interpreted broadly. For example, the connection may be a fixed connection, a detachable connection, or an integral connection; or may be a mechanical connection or an electrical connection; or may be a direct connection, an indirect connection by means of an intermediate medium, or internal communication between two elements. For those of ordinary skill in the art, the specific meaning of the terms in the description will be understood according to specific circumstances.

In order to make the objectives, technical solutions and advantages of the present invention clearer, the description of the present invention will be further presented in detail below with reference to the drawings.

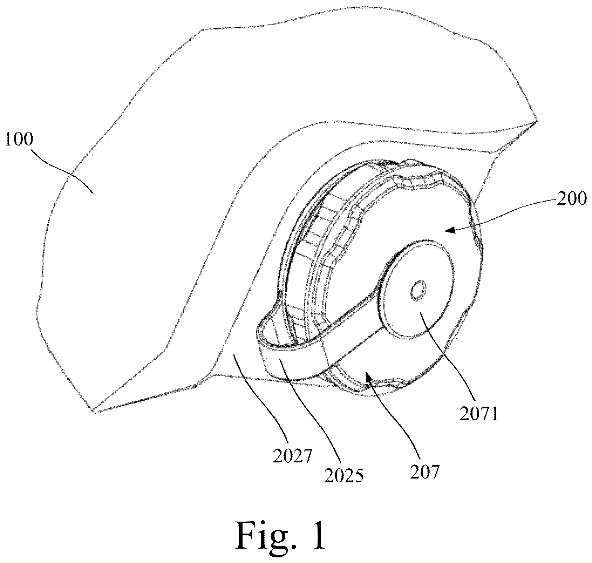

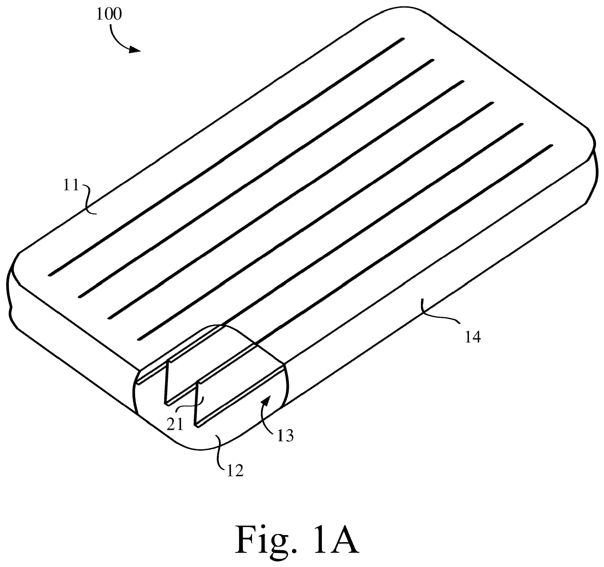

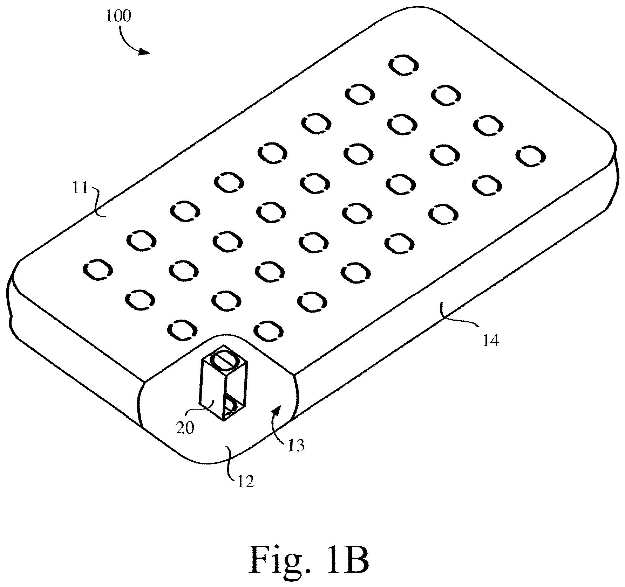

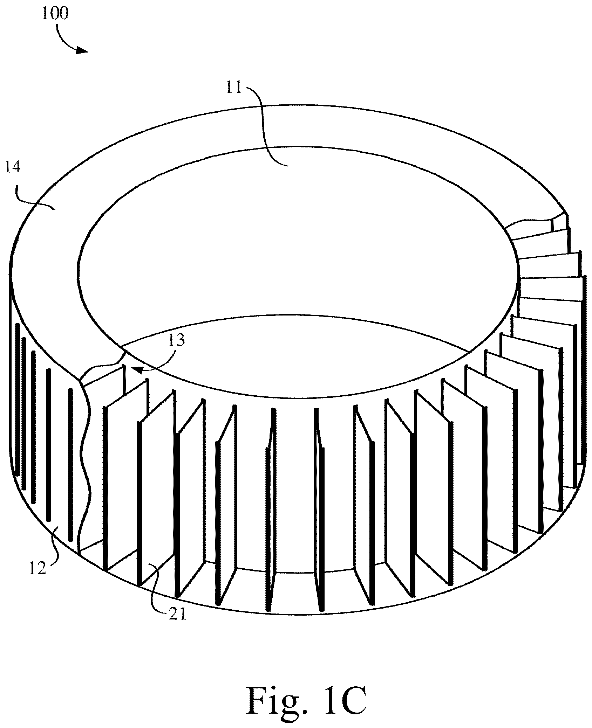

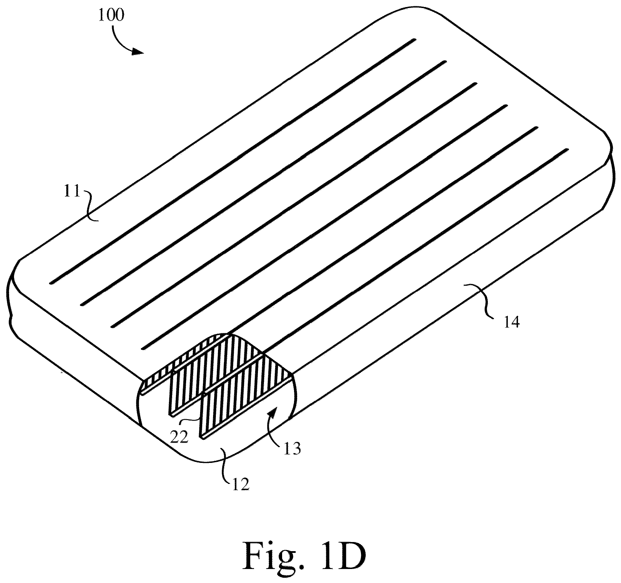

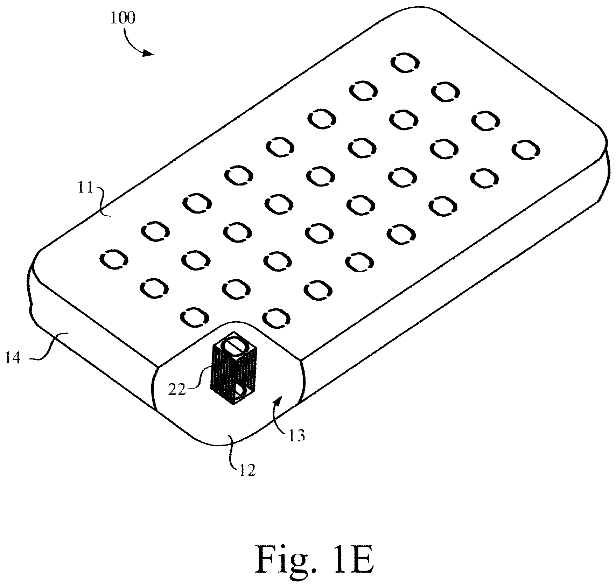

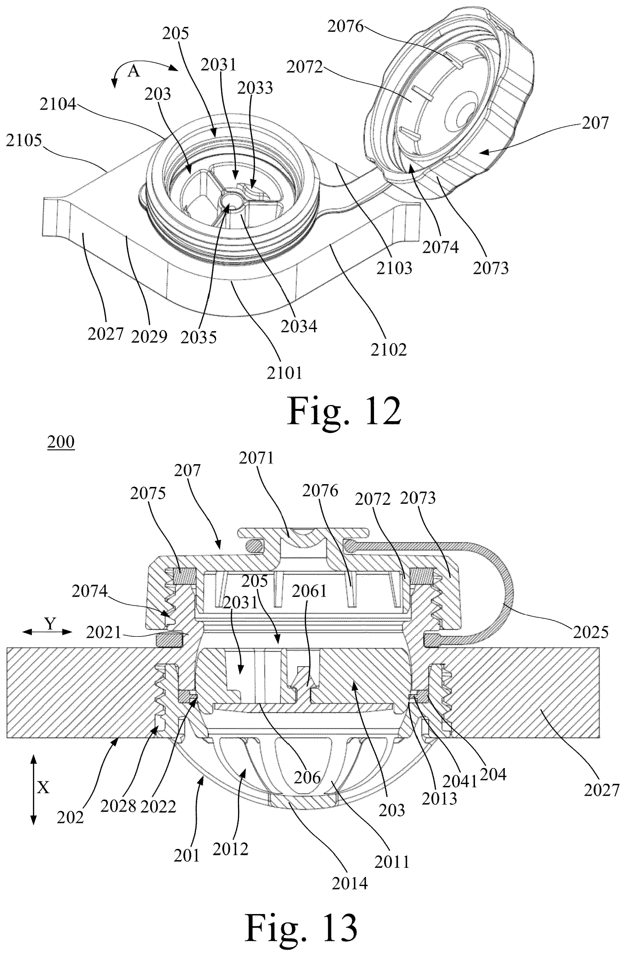

As it will be widely presented and described below, and shown in the attached figures, preferred embodiments shown and described herein provide an inflatable product. Referring to Fig. 1, it is shown a schematic structural diagram of an air valve 200 shown in Fig. 12, applied to an inflatable mattress or a TPU inflatable sponge mattress.

Referring to Figs. 1A to 1E, in the description of the present invention, an inflatable main body 100 includes at least a first wall 11, a second wall 12, opposite to the first wall 11, and a side wall 14 connecting the first and the second wall. An inflatable chamber 13, defined by the first wall 11, the second wall 12 and the side wall 14, is configured for inflation; after the pressure of gas (e.g., air) in the inflatable chamber 13 reaches a desired value, the inflatable main body 100 is in an inflated state and retains in a preset shape.; After the air in the inflatable chamber 13 is discharged, the inflatable main body 100 is in a deflated state, and the volume of the inflatable main body 100 is greatly reduced relative to the volume thereof in the inflated state, thereby facilitating the storage of the inflatable main body 100.

A plurality of tensioning members 20 are provided in the inflatable chamber 13 of the inflatable main body 100, and the tensioning members 20 are connected to the first wall 11 and the second wall 12 by high-frequency welding, hot melting, adhesive bonding or other connection means. The tensioning members 20, after being tensioned, provide a tensile force to the first wall 11 and the second wall 12 to limit the deformation of the inflatable main body 100, so that the inflatable main body 100 can remain in the preset shape after being inflated.

Optionally, the plurality of tensioning members 20 have different structures in different embodiments. For example, each tensioning member 20 is a sheet-like tensioning member 21 (as shown in FIGS. 1A or 1C) or a string-like tensioning member 22 (as shown in FIGS. 1D or 1E).

The sheet-like tensioning member 21 may have a single-layer structure or a composite layer structure according to actual requirements.

When the sheet-like tensioning member 21 is a single-layer sheet material, it may be made of a polymer material. The polymer material may include, but is not limited to, one or more of polyvinyl chloride (PVC), polyurethane (PU), thermoplastic urethanes (TPU), polyethylene terephthalate (PET), ethylene-vinyl acetate (EVA) copolymer and nylon. It can be understood that a main body part of the single-layer sheet-like tensioning member 21 may be made of materials other than the polymer material in some other embodiments, such as a fabric material. The fabric material is optionally finely woven or forms a mesh-like structure. The fabric material may be, but is not limited to, a natural fiber fabric (e.g., but not limited to, a cotton fabric, a linen fabric, a wool fabric and a silk fabric) or a synthetic fiber fabric (e.g., but not limited to, a polyester fiber fabric, a polyethylene fiber fabric, and a polypropylene fiber fabric).

When the sheet-like tensioning member 21 is a composite sheet material, it is composed of two or more layers of sheet materials bonded together by adhesive bonding, welding or other means, and each layer of the multi-layer sheet material may be made of the polymer material described above or the other materials described above.

The string-like tensioning member 22 includes one or more string bodies, which span a distance between the first wall 11 and the second wall 12 of the inflatable main body 100 and are optionally parallel or substantially parallel in space. For example, these string bodies are spaced apart from each other in such a way that the distances between these string bodies are equal or vary according to a certain regularity. The material of the one or more string bodies in the string-like tensioning member 22 may be, but is not limited to, a natural fiber (e.g., but not limited to, a cotton fiber, a linen fiber, a wool fiber, and a silk fiber) or a synthetic fiber (e.g., but not limited to, a polyester fiber, a polyethylene fiber, and a polypropylene fiber). The string-like tensioning member 22 is generally indirectly connected to the first wall 11 and the second wall 12 via a connector. The connector may be made of, but not limited to, a polymer material that facilitates welding of the first wall 11 and the second wall 12.

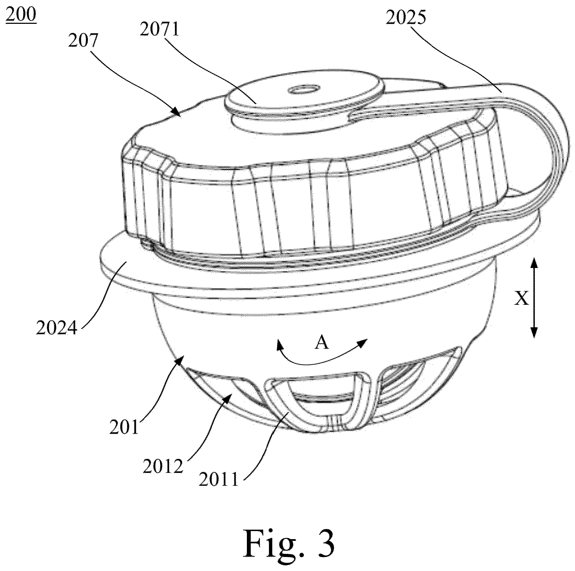

The air valve 200 shown in Fig. 3 represents an air valve according to Embodiment 1 of the present invention; this air valve may also be applied to the inflatable mattress or the TPU inflatable sponge mattress.

The air valve 200 shown in Fig. 1 represents an air valve according to Embodiment 2 of the present invention; this air valve may also be applied to the applied to an inflatable mattress or a TPU inflatable sponge mattress.

Embodiment 1 and Embodiment 2 will be described in detail below.

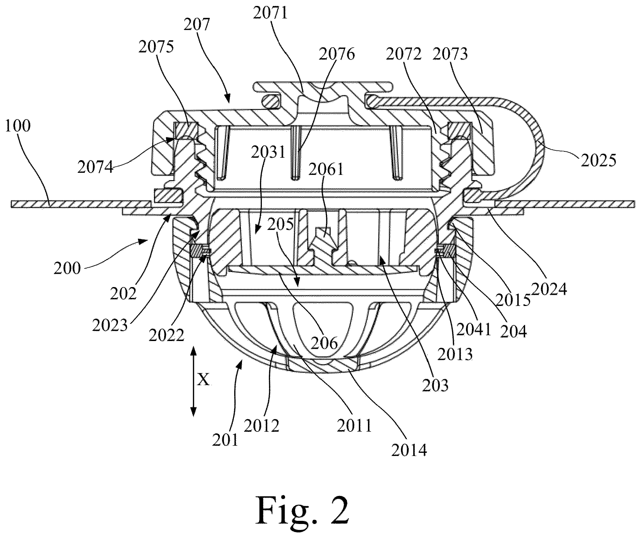

As an example, referring to Figs. 1 and 2, an inflatable product in an embodiment shown and described herein may include the air valve 200 and the inflatable main body 100 as described in any one of the following embodiments. The inflatable main body 100 includes the inflatable chamber 13. A valve seat 202 of the air valve 200 is connected to the inflatable main body 100 such that a valve body 201 of the air valve 200 is located in the inflatable chamber 13.

As an example, the inflatable product is, for example, the inflatable mattress or the thermoplastic polyurethane (TPU) inflatable sponge mattress. A structure of the air valve 200 will be described in detail below in conjunction with the drawings.

### Embodiment 1

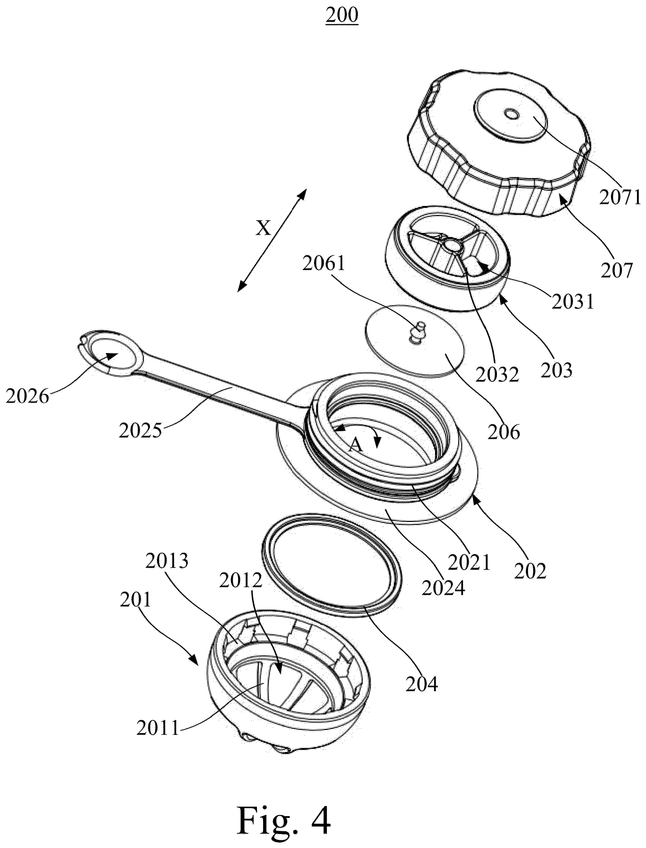

Embodiment 1 is represented in Figs. 3 and 4. Fig. 3 is a diagram of an overall structure of an air valve. The valve seat 202 of the air valve 200 is made of a material which is suitable for high frequency, such as polyvinyl chloride (PVC), thermoplastic polyurethane (TPU) or polyethylene vinyl acetate (PEVA); an valve core 203 of the air valve 200 is made of a material having good self-lubrication, such as polyoxymethylene (POM) or polytetrafluoroethylene (PTFE); and an valve cap 207 of the air valve 200 and the valve body 201 are made of a material which has high strength and degree of finish, such as acrylonitrile butadiene styrene copolymer (ABS), polycarbonate (PC), poly(methyl methacrylate) (PMMA) or polypropylene (PP).

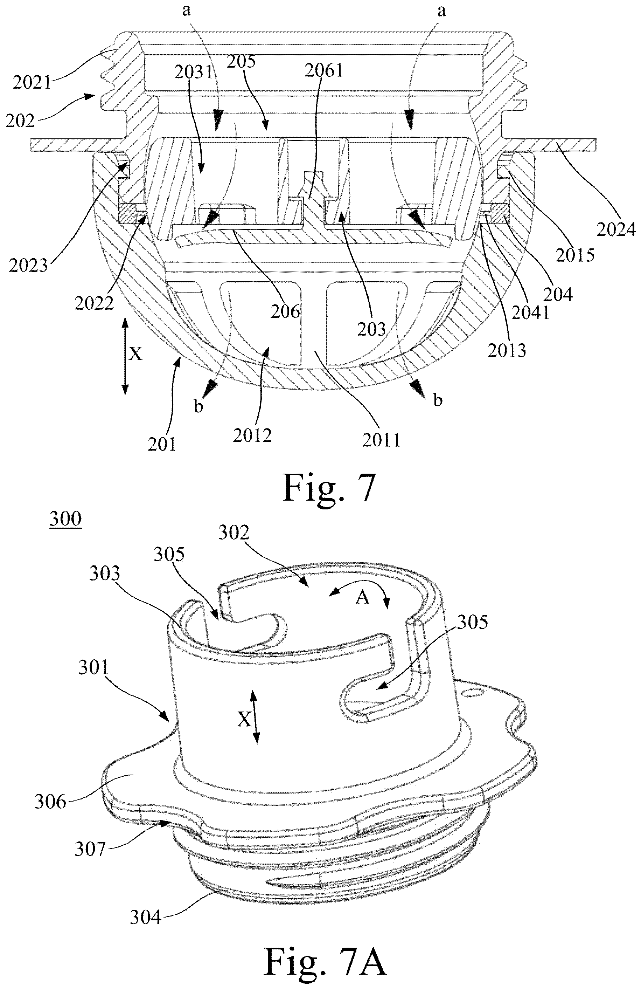

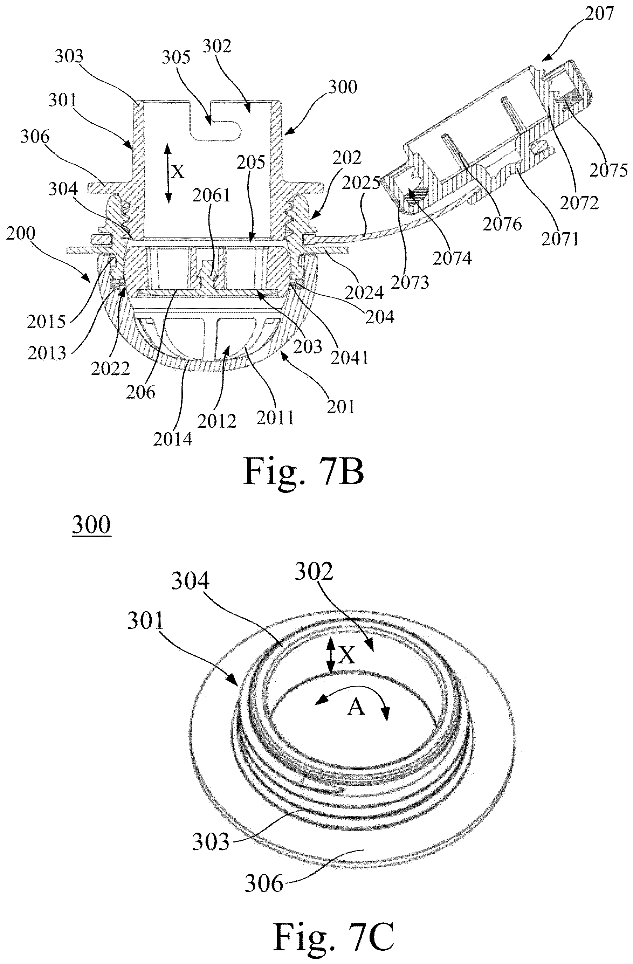

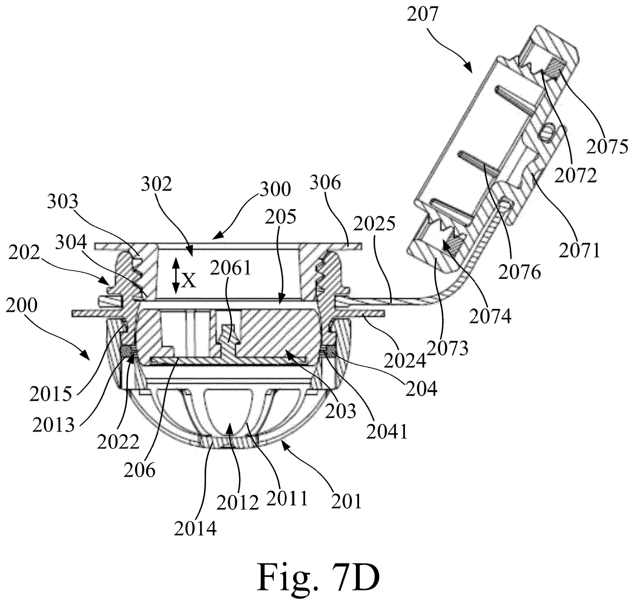

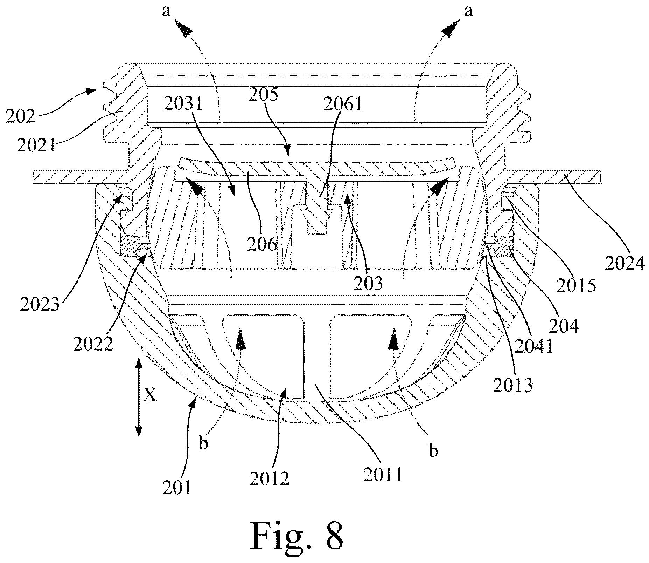

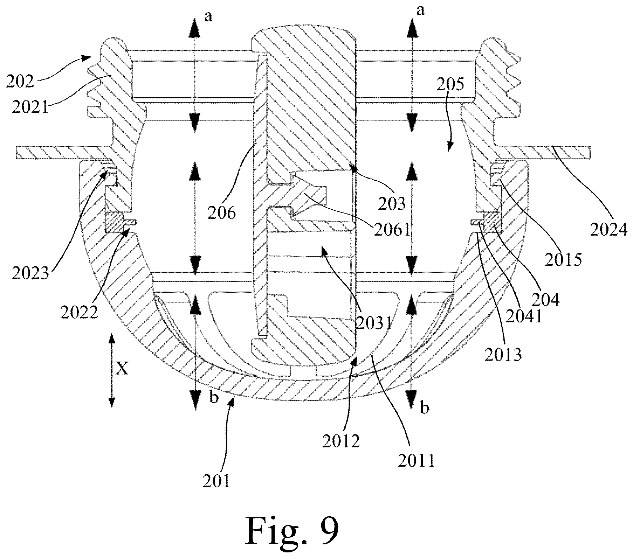

As an example, Fig. 4 is an exploded view of an air valve. The air valve 200 includes: the valve body 201, the valve seat 202, the valve core 203 and a first sealing member 204. The valve seat 202 is connected to the valve body 201 to form a fluid channel 205, and the fluid channel 205 is configured for communication with a second channel 302 of a connector 300 described later (see Fig. 7B). The valve core 203 includes three air vents 2031. The valve core 203 is located in the fluid channel 205, the air vents 2031 are in communication with the fluid channel 205, and the valve core 203 is rotatably arranged in the fluid channel 205 relative to the valve seat 202, such that the valve core 203 can be switched between a first position (i.e., an inflation state shown in Fig. 7 and a deflation state shown in Fig. 8) and a second position (i.e., a rapid inflation/deflation state shown in Fig. 9), and the first sealing member 204 surrounds the valve core 203 and is limited between the valve body 201 and the valve seat 202. Preferably, the valve core 203 can rotate 360 degrees in the fluid channel 205 relative to the valve seat 202. It can be understood by those skilled in the art that the valve core 203 is capable of 360-degree omnidirectional rotation within the fluid channel 205, enabling unrestricted multi-axis movement centered at the position of the through hole 2035, along which passes a central axis 203a of the valve core 203.

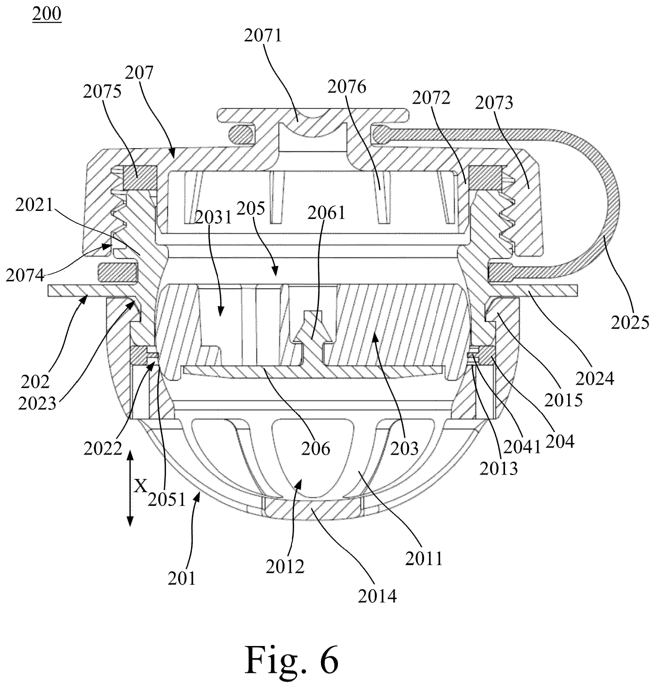

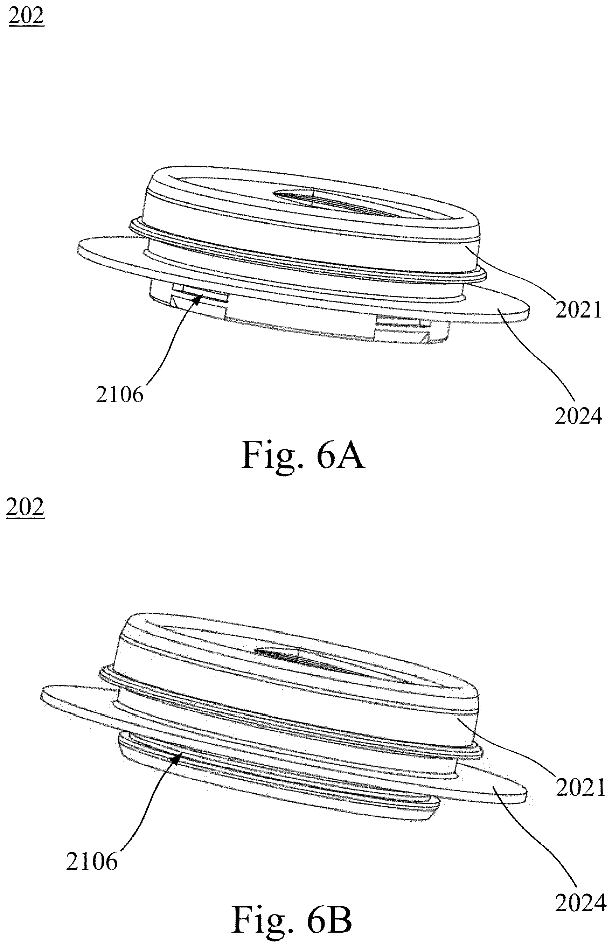

In the first position, the valve core 203 is in contact with an inner wall 2051 of the fluid channel 205, and the first sealing member 204 is in contact with the valve core 203 and seals the valve core 203 against the inner wall 2051 (in conjunction with Fig. 6, that is, including an inner wall of a first main body portion 2021 described later and an inner wall of a first connecting portion 2013 described later) of the fluid channel 205. In the second position, the valve core 203 is spaced apart from the inner wall 2051 of the fluid channel 205, and the first sealing member 204 surrounds the valve core 203 and is spaced apart from the valve core 203.

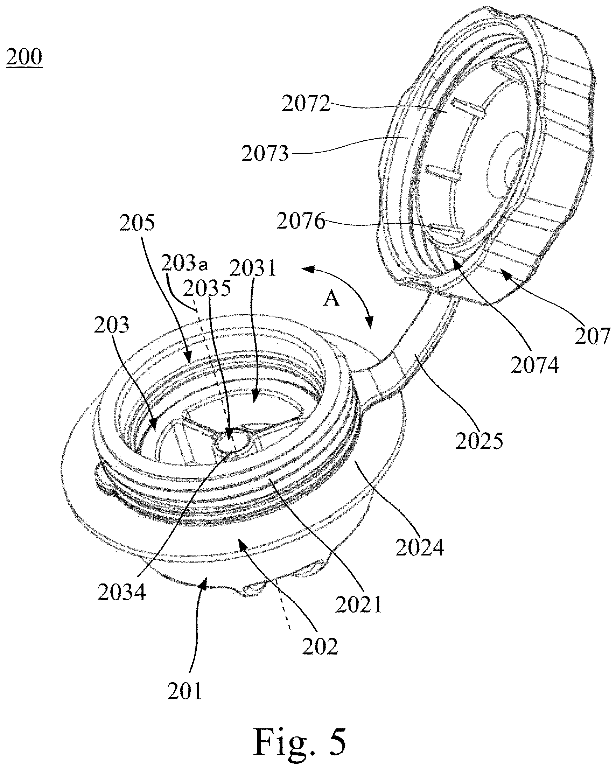

As an example, referring to Fig. 5, the three air vents 2031 are spaced apart in a circumferential direction (i.e., direction A shown in Fig. 5), and the three air vents 2031 are in communication with the fluid channel 205. However, the specific number and shape of the air vents 2031 are not limited in the embodiments shown and described herein. For example, it is possible to provide the three fan-shaped air vents 2031 as shown in the embodiments of the present invention, or four fan-shaped or irregularly-shaped air vents 2031.

Just as an example, referring to Figs. 4 and 5, eight supports 2011 are provided on a side of the valve body 201 away from the valve seat 202, and the eight supports 2011 are spaced apart in the circumferential direction to form a plurality of air outlet through holes 2012. For example, the valve body 201 may be configured in a grid shape, and the air outlet through holes 2012 are in communication with the fluid channel 205 to facilitate the flow of a fluid (e.g., air). One end of each support 2011 extends toward the valve seat 202 and is connected to the first connecting portion 2013, the other end thereof extends away from the valve seat 202 and is connected by means of a second connecting portion 2014, and the second connecting portion 2014 is located at a bottom end of the valve body 201.

That is to say, eight mesh supports 2011 forming air inlet/outlets (i.e., the air outlet through holes 2012) are provided at the bottom of the valve body 201, and the supports 2011 are arc-shaped. The number and shape thereof are not specifically limited in the embodiments shown and described herein, three, five or ten supports may be provided and the supports may also be shaped as L-shaped, linear, etc.

As an example, Fig. 5 is a schematic diagram of a valve cap of an air valve in an open state, while Fig. 6 is a schematic cross-sectional view of an air valve.

As an example, the first connecting portion 2013 is arranged on an inner wall of the valve body 201 and radially extends toward the fluid channel 205, that is, the inner wall of the valve body 201 protrudes to form the first connecting portion 2013. The valve seat 202 includes a first main body portion 2021. The first main body portion 2021 is internally hollow and is connected to the valve body 201 to form the fluid channel 205, the first main body portion 2021 extends in an axial direction (i.e., direction X shown in Fig. 6), such that the first main body portion 2021 and the first connecting portion 2013 are arranged opposite each other and spaced apart in the axial direction and form an accommodating space 2022 together with the inner wall of the valve body 201, and the first sealing member 204 is located in the accommodating space 2022.

As an example, a hook 2015 is provided at a top end of the inner wall of the valve body 201: the hook 2015 and the first connecting portion 2013 are spaced apart in the axial direction. A mounting portion 2023 is provided on an outer wall of the first main body portion 2021: the mounting portion 2023 is configured for connection to the hook 2015 in a snap-fit manner to connect the valve seat 202 to the valve body 201 and clamp the first sealing member 204 in the accommodating space 2022.

The mounting portion 2023 may be at least a groove 2106 or a hole. The groove 2106 may be a plurality of grooves 2106 spaced apart around the outer wall of the first main body portion 2021, with reference to Fig. 6A, or a continuous groove 2106, with reference to Fig. 6B. Preferably, the number of grooves 2106 or holes spaced apart around the outer wall of the first main body portion 2021 corresponds to the number of hooks 2015. It is possible to provide four, sixth or eight grooves 2106 or holes and hooks 2015, which are not limited thereto.

As an example, an outer periphery of the valve core 203 is in contact with the inner wall of the first main body portion 2021 of the valve seat 202 and the inner wall of the first connecting portion 2013 of the valve body 201. A plurality of ribs 2041 are provided on a side of the first sealing member 204 facing the valve core 203. Preferably, the plurality of ribs 2041 are spaced apart in the circumferential direction and all abut against the outer periphery of the valve core 203. In the first position (i.e., the inflation state shown in Fig. 7 and the deflation state shown in Fig. 8), the plurality of ribs 2041 all abut against the valve core 203; and in the second position (i.e., the rapid inflation/deflation state shown in Fig. 9), the plurality of ribs 2041 surround the valve core 203 and are spaced apart from the valve core 203.

That is to say, the valve seat 202 and the valve body 201 are connected together by means of a hook-fastening structure and a seal ring (i.e., the first sealing member 204 described above) of the air valve 200 is arranged between the valve seat 202 and the valve body 201. The seal ring (i.e., the first sealing member 204 described above) can be firmly positioned by means of the connection between the valve seat 202 and the valve body 201 and can prevent the seal ring (i.e., the first sealing member 204 described above) from loosening or falling off, which would otherwise affect a sealing effect, thus reducing the risk of air leakage from the inflatable product. The outer periphery of the valve core 203 is in contact with the inner wall of the valve seat 202 and the inner wall of the valve body 201. The plurality of ribs 2041 are arranged at an edge of the seal ring (i.e., the first sealing member 204 described above) and the same ribs 2041 are in contact with the outer periphery of the valve core 203, thereby achieving a sealing effect.

Preferably, the length and number of the ribs 2041 are not limited, and at least one rib is provided. Advantageously, one, two or three ribs may be provided and each rib may have a length of 1 mm, 2 mm, 3 mm, etc. Preferably, the ribs 2041 are shorter or thinner, so that a friction force between the seal ring (i.e., the first sealing member 204 described above) and the valve core 203 can be reduced, thus facilitating the turning of the valve core 203.

As an example, referring to Fig. 5 and in conjunction with Fig. 1, a part of an outer periphery of the first main body portion 2021 protrudes outwardly to form a first abutting portion 2024, and the first abutting portion 2024 is configured to abut against the inflatable main body 100 described above. The first abutting portion 2024 is annular, that is, a projection thereof in the axial direction is annular. Specifically, a wall of the inflatable main body 100 is connected to the first abutting portion 2024 of the air valve 200 by means of high-frequency welding or hot melting to arrange the air valve 200 on the wall of the inflatable main body 100.

As an example, referring to Figs. 4 to 6, a connecting strap 2025 is also connected to the first main body portion 2021: the connecting strap 2025 is spaced apart from the first abutting portion 2024 in the axial direction and is located above the first abutting portion 2024 (that is, the first abutting portion 2024 is closer to the valve body 201) in the axial direction. A snap-fit through hole 2026 is provided in an end of the connecting strap 2025 away from the first main body portion 2021.

As an example, the air valve 200 further includes a valve diaphragm 206. The valve diaphragm 206 is located on a side of the valve core 203 facing the valve body 201. The valve diaphragm 206 is connected to the valve core 203 by means of a connecting rod 2061 and covers the three air vents 2031 described above.

As an example, Fig. 7 is a schematic diagram of an inflation state when a valve core of the air valve is in a first position. Fig. 8 is a schematic diagram of a deflation state when a valve core of the air valve is in a first position.

When a user presses the valve core 203 in the inflation state in the first position shown in Fig. 7, the valve core 203 in an airflow channel (i.e., the fluid channel 205) defined by the valve seat 202 is flipped to the deflation state in the first position. When the user presses and rolls up the inflatable mattress or the TPU inflatable sponge mattress for deflation, due to the one-way valve diaphragm 206 arranged on the valve core 203, it is possible to prevent outside air from flowing back into the inflatable mattress or the TPU inflatable sponge mattress.

Fig. 9 shows a schematic diagram of a state of a valve core of the air valve in a second position during rapid deflation or inflation.

After the inflatable mattress or the TPU inflatable sponge mattress is used, the valve core is flipped to be in the second position shown in Fig. 9, allowing the air inside the mattress to be discharged quickly.

When the user unfolds the rolled-up TPU inflatable sponge mattress for reuse, the valve core 203 is flipped to be in the second position shown in Fig. 9, and the TPU inflatable sponge mattress can quickly draw in the outside air due to the expansion effect of the sponge itself, allowing the mattress to unfold naturally. Subsequently, when an air pump is needed to replenish the inflatable main body with the air, the valve core 203 is flipped to the inflation state in the first position shown in Fig. 7.

That is to say, referring to Fig. 7 and in conjunction with Fig. 1, in the inflation state, that is, when the inflatable main body 100 described above needs to be inflated, the valve core 203 is rotated in the fluid channel 205 until the valve diaphragm 206 is located at the bottom end of the valve core 203 in the axial direction (i.e., in the direction X shown in Fig. 7), that is, the valve diaphragm 206 is then closer to the air outlet through holes 2012 of the valve body 201. In other words, the valve diaphragm 206 then only allows fluid to enter the inflatable main body 100. When the inflatable main body 100 is inflated by using the air pump, under the pressure of an airflow from the air pump, the fluid then flows along arrows shown in Fig. 7 (i.e., from end a to end b), the fluid pushes at least a part of the valve diaphragm 206 in a direction close to the inflatable main body 100, so as to separate the valve diaphragm 206 from the air vents 2031: the air vents 2031 are then partially in a conducting state, and the entire fluid channel 205 is in an open state, such that the fluid can enter the air outlet through holes 2012 through the air vents 2031 to inflate the inflatable main body 100.

In the process of inflating the inflatable main body 100, the air valve 200 may also be connected to an external inflation apparatus by using the connector 300.

As an example, referring to Figs. 7 to 7D and in conjunction with Fig. 1, the fluid channel 205 is configured for communication with the second channel 302 of the connector 300 described above.

As an example, the valve seat 202 of the air valve 200 is connected to the inflatable main body 100 such that the valve body 201 of the air valve 200 is located in the inflatable chamber. One end of the connector 300 is connected to the air valve 200, and the other end thereof is connected to an air nozzle of the external apparatus (e.g., the air pump) to inflate or deflate the inflatable mattress or the TPU inflatable sponge mattress (an air pump having an air extraction function being used to connect to the connector for deflation). The wall of the inflatable main body 100 is connected to the valve seat 202 of the air valve 200 by means of high-frequency welding or hot melting to arrange the air valve 200 on the wall of the inflatable main body 100.

Fig. 7B is a schematic cross-sectional view of the air valve shown in Fig. 2 in Embodiment 1 of the present invention used in cooperation with a first type of connector (see Fig. 7A). The connector 300 may be connected to the air nozzle of the air pump (i.e., the external apparatus) to inflate or deflate the inflatable mattress or the TPU inflatable sponge mattress (the air pump having an air extraction function being used to connect to the connector for deflation).

As an example, Fig. 7A is a schematic perspective view of the connector shown in Fig. 7B. The connector 300 includes a connector body 301. The connector body 301 extends in the axial direction (i.e., the direction X shown in Fig. 7A), and the connector body 301 is internally hollow to form the second channel 302; and the connector body 301 comprises a first end 303 and a second end 304 that are arranged opposite each other in the axial direction. The first end 303 of the connector body 301 is provided with a recess 305 which abuts against the external apparatus (e.g., the air pump), and the second end 304 303 of the connector body 301 is provided with a thread and is threadedly connected to the air valve 200, such that the air pump is connected to the air valve 200 to inflate or deflate the inflatable mattress or the TPU inflatable sponge mattress. Preferably, an outer wall of the second end 304 is provided with an external thread, an inner wall of the valve seat 202 is provided with an internal thread, and the second end 304 is threadedly connected to the valve seat 202 by the internal thread mating with the external thread. The second end 304 may be provided with an internal thread and the outer wall of valve seat 202 may be provided with an external thread to threadedly connect the second end 304 to the valve seat 202.

It should be noted that the shape and number of the recesses 305 are not limited in the embodiments shown and described herein; and the specific shape thereof may be selected according to the shape of the air pump, for example, an L-shape as shown in the embodiments of the present invention, and the number thereof may also be selected according to the shape of the air pump, for example, one, two or more recesses.

As an example, a protruding portion 306 is provided on a side wall of the connector body 301 close to the second end 304, and the protruding portion 306 surrounds the side wall of the connector body 301 and is located at the top of the valve seat 202 of the air valve 200 described later. The shape of the protruding portion 306 is not limited to the embodiments shown and described herein, and the protruding portion may have a circular shape, or a quadrangular shape or other irregular shapes such as a plum-petal shape.

As an example, a plurality of weight reduction recesses 307 may also be provided on an outer periphery of the protruding portion 306 to achieve a weight reduction function. Moreover, a protrusion formed between adjacent weight reduction recesses 307 can facilitate the user to rotate the connector 300 for mounting on the valve seat 202. The plurality of weight reduction recesses 307 are spaced apart in a circumferential direction (i.e., direction A shown in Fig. 7A). The shape and number of the weight reduction recesses 307 are not specifically limited in the embodiments shown and described herein. For example, it is possible to provide two arc-shaped weight reduction recesses 307, three circular weight reduction recesses 307, or four square weight reduction recesses 307, etc.

Fig. 7D is a schematic cross-sectional view of the air valve shown in Fig. 2 in Embodiment 1 of the present invention used in cooperation with a second type of connector (see Fig. 7C).

Fig. 7C is a schematic perspective view of the second type of connector.

In other possible implementations, referring to Figs. 7C and 7D, the connector 300 includes a connector body 301 and a protruding portion 306. The connector body 301 extends in the axial direction (i.e., the direction X shown in Fig. 7C), and the connector body 301 is internally hollow to form a second channel 302; and the connector body 301 comprises a first end 303 and a second end 304 that are arranged opposite each other in the axial direction., The first end 303 is configured for connection to the external apparatus (e.g., the air pump) to insert the external apparatus into the second channel 302, the second end 304 is provided with a thread and is threadedly connected to the air valve 200, such that the air pump is connected to the air valve 200 to inflate or deflate the inflatable mattress or the TPU inflatable sponge mattress.

Preferably, an outer wall of the second end 304 is provided with an external thread, an inner wall of the valve seat 202 is provided with an internal thread, and the second end 304 is threadedly connected to the valve seat 202 by the internal thread mating with the external thread. The second end 304 of the connector body 301 may be provided with an internal thread and the outer wall of valve seat 202 may be provided with an external thread to threadedly connect the second end 304 to the valve seat 202. The protruding portion 306 surrounds an outer periphery of the first end 303 of the connector body 301, and the protruding portion 306 is arranged at the top of the valve seat 202 of the air valve 200 described later. The shape of the protruding portion 306 is not limited to the embodiments shown and described herein, and the protruding portion may have a circular shape, or a quadrangular shape or other irregular shapes.

That is to say, during inflation, the air pump inflates the air valve 200 by means of the connector 300, and the air enters the fluid channel 205 from the second channel 302 and then flows through the air outlet through holes 2012 and into the inflatable chamber of the inflatable main body 100.

During inflation, if the airflow in the inflatable main body 100 flows back outwardly, that is, flows in a direction opposite the arrows shown in Fig. 7 (i.e., from end b to end a), and the back flowing air pushes the valve diaphragm 206 in a direction away from the inflatable main body 100, namely, toward the air vents 2031. In this way, the valve diaphragm 206 closes the air vents 2031, thereby preventing the air from flowing back.

Referring to Fig. 8 and in conjunction with Fig. 1, in the deflation state, that is, when the inflatable main body 100 described above needs to be deflated, the valve core 203 is rotated in the fluid channel 205 until the valve diaphragm 206 is located at the top end of the valve core 203 in the axial direction (i.e., the direction X shown in Fig. 8), that is, the valve diaphragm 206 is then far away from the air outlet through hole 2012 of the valve body 201. In other words, the valve diaphragm 206 then only allows the fluid to flow out of the inflatable main body 100. In this case, when the inflatable main body 100 is pressed, since the pressure of the air in the inflatable main body 100 is greater than the external atmospheric pressure, the fluid flows along arrows shown in Fig. 8 (i.e., from end b to end a), the fluid pushes at least a part of the valve diaphragm 206 in a direction away from the inflatable main body 100; the air vents 2031 are then partially in the conducting state, so as to separate the valve diaphragm 206 from the air vents 2031, and the entire fluid channel 205 is in the open state, such that the fluid can flow out of the interior of the inflatable main body 100 to deflate the inflatable main body 100.

Similarly, during deflation, if the air in the external environment flows back into the inflatable main body 100, that is, flows in a direction opposite the arrows shown in Fig. 8 (i.e., from end a to end b), the back flowing air pushes the valve diaphragm 206 in the direction close to the inflatable main body 100, namely, toward the air vents 2031. In this way, the valve diaphragm 206 closes the air vents 2031, thereby preventing the air from flowing back.

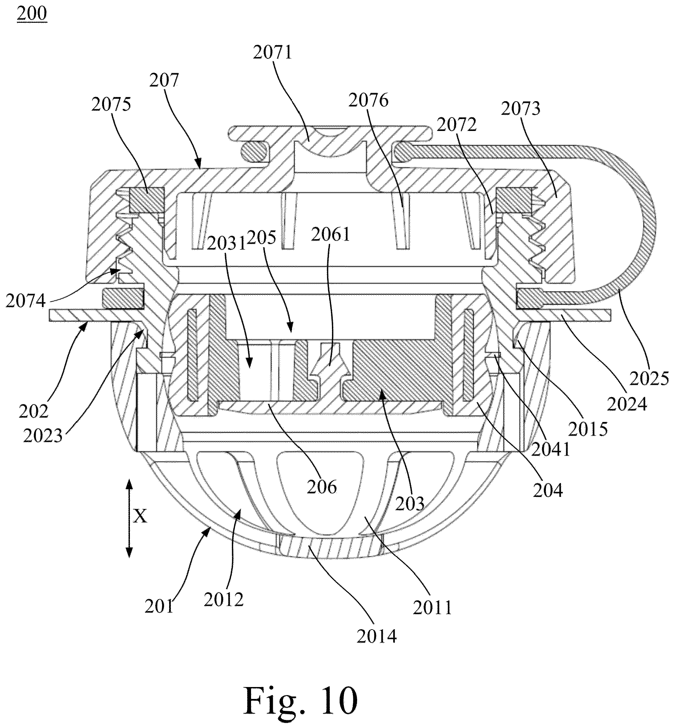

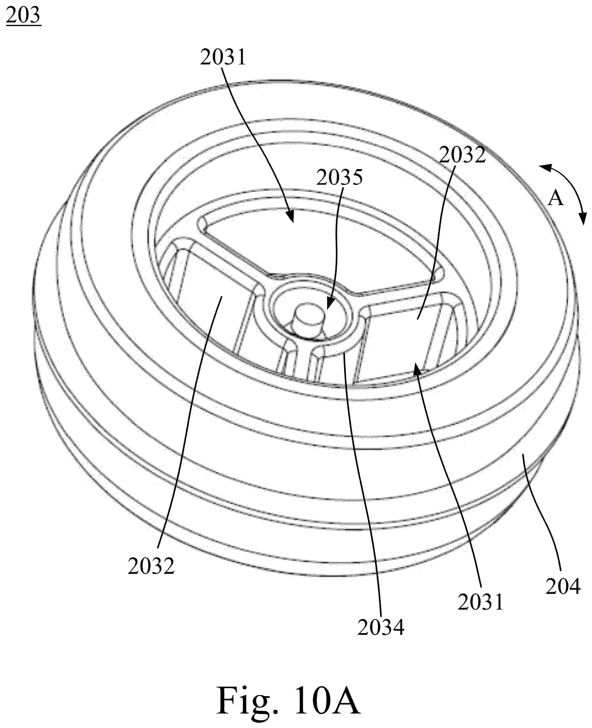

When needing to rapidly deflate the inflatable main body 100, the user rotates the valve core 203 to the state shown in Fig. 9, that is, a vertical state relative to the fluid channel 205. In this way, the blocking of the fluid channel 205 by the valve core 203 is minimized, facilitating the rapid outflow of the air in the inflatable main body 100. When needing to rapidly inflate the inflatable main body 100, the user may also rotate the valve core 203 to the state shown in Fig. 9, that is, a vertical state relative to the fluid channel 205, and the TPU inflatable sponge mattress can quickly draw in the outside air due to the expansion effect of the sponge itself, allowing the mattress to unfold naturally. Subsequently, when the air pump is needed to replenish the inflatable main body with the air, the valve core 203 is flipped to the inflation state shown in Fig. 7. During switching of the valve core 203 from the first position shown in Figs. 7 and 8 to the second position shown in Fig. 9, the user may rotate the valve core 203 to change the size of an opening of the fluid channel, thus adjusting an inflation/deflation speed of the inflatable main body 100. As an example, the air valve 200 further includes a valve cap 207. Fig. 10 is a schematic cross-sectional view of a valve cap being connected to a valve seat by a thread on the valve cap mating with an external thread provided at an end of the valve seat. Fig. 10A is a schematic structural diagram of the valve core shown in Fig. 10.

In other possible implementations, the seal ring (i.e., the first sealing member 204 described above) of the air valve is arranged on the valve core 203 along a circumferential edge of the valve core 203 by using a rubber-coated structure, the seal ring (i.e., the first sealing member 204 described above) is in contact with the inner wall of the valve seat 202 and the inner wall of the valve body 201, and the ribs 2041 on an outer wall of the seal ring (i.e., the first sealing member 204 described above) are also in contact with the inner wall of the valve seat 202, so that a better sealing effect can be achieved.

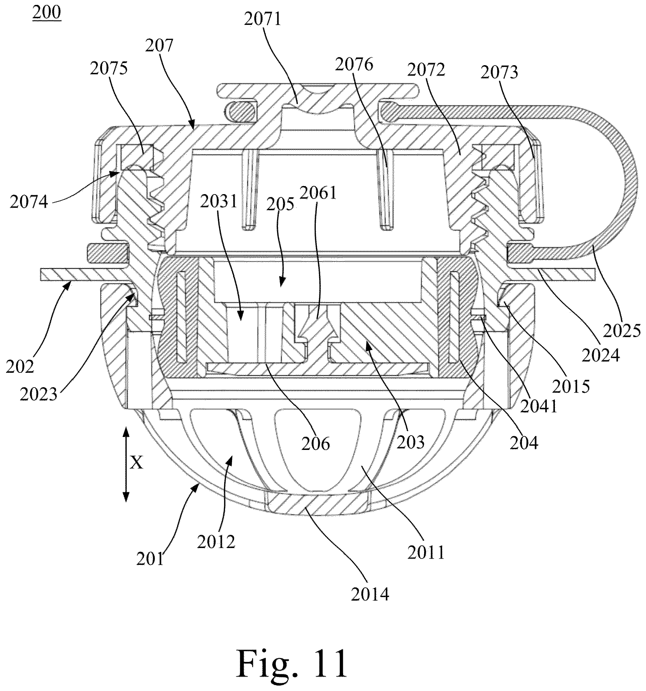

Fig. 11 is a schematic cross-sectional view of a valve cap being connected to a valve seat by a thread on the valve cap mating with an internal thread provided at an end of the valve seat. The valve core is the valve core shown in Fig. 10 or Fig. 10A.

As an example, referring to Figs. 10 to 11, a snap-fit portion 2071 is provided at the top of the valve cap 207, and the snap-fit through hole 2026 (shown in Fig. 4) of the connecting strap 2025 engages with the snap-fit portion 2071 to connect the valve cap 207 to the valve seat 202, thereby preventing the valve cap 207 from being lost. The valve cap 207 includes a first portion 2072 and a second portion 2073. The first portion 2072 and the second portion 2073 are spaced apart in the radial direction to form a connecting groove 2074, and the connecting groove 2074 is configured to accommodate the valve seat 202 and is threadedly connected to the valve seat. A second sealing member 2075 is provided in the connecting groove 2074 to enable a sealed connection between the valve cap 207 and the valve seat 202.

As an example, the valve cap 207 and the valve seat 202 may be connected as shown in Fig. 10, an outer wall of the connecting groove 2074, that is, a wall of the second portion 2073 facing the fluid channel 205 in the radial direction is provided with an internal thread, an outer wall of a top end of the valve seat 202 is provided with an external thread, and the internal thread and the external thread are threadedly connected to each other to connect the valve cap 207 to the valve seat 202. Alternatively, they may be connected as shown in Fig. 11, an inner wall of the connecting groove 2074, that is, a wall of the first portion 2072 facing away from the fluid channel 205 in the radial direction is provided with an external thread, an inner wall of the top end of the valve seat 202 is provided with an internal thread, and the internal thread and the external thread are threadedly connected to each other to connect the valve cap 207 to the valve seat 202.

As an example, in conjunction with Fig. 5, the first portion 2072 is internally hollow and is in communication with the fluid channel 205, an inner wall of the first portion 2072 facing the fluid channel 205 in the radial direction is provided with a plurality of reinforcing ribs 2076, and the plurality of reinforcing ribs 2076 are spaced apart in the circumferential direction (i.e., the direction A shown in Fig. 5), so as to enhance the stiffness of the valve cap 207 and improve the sealing effect of the air valve 200 after the valve cap 207 is connected to the valve seat 202.

The number and shape of the reinforcing ribs 2076 are not limited in the embodiments shown and described herein, five, eight, or ten ribs, etc. may be provided, and the ribs may be in an elongated shape, a circular shape, or other irregular shapes.

That is to say, in other possible implementations, referring to Figs. 10 to 11, an embodiment of the present invention further provides an air valve 200. The air valve 200 includes: a valve body 201, a valve seat 202, a valve core 203 and a first sealing member 204. The first sealing member 204 of the air valve 200 may also be configured as shown in Fig. 10 or Fig. 9. The valve seat 202 is connected to the valve body 201 to form a fluid channel 205, and the fluid channel 205 is configured for communication with the second channel 302 of the connector 300 described above (see Fig. 7B or Fig. 7D). The valve core 203 includes three air vents 2031. The valve core 203 is located in the fluid channel 205, the air vents 2031 are in communication with the fluid channel 205, and the valve core 203 is rotatably arranged in the fluid channel 205 relative to the valve seat 202, such that the valve core 203 can be switched between a first position (i.e., the inflation state shown in Fig. 7 and the deflation state shown in Fig. 8) and a second position (i.e., the rapid inflation/deflation state shown in Fig. 9), and in conjunction with Fig. 10A, the first sealing member 204 surrounds the valve core 203 and is integrally formed with the valve core 203.

In the first position (i.e., the inflation state shown in Fig. 7 and the deflation state shown in Fig. 8), the valve core 203 is in contact with an inner wall 2051 of the fluid channel 205, and the first sealing member 204 is in contact with the inner wall 2051 of the fluid channel 205 (in conjunction with Fig. 6, that is, including an inner wall of a first main body portion 2021 described later and an inner wall of a first connecting portion 2013 described later) and seals the valve core 203 against the inner wall 2051 of the fluid channel 205. In the second position (i.e., the rapid inflation/deflation state shown in Fig. 9), the valve core 203 is spaced apart from the inner wall 2051 of the fluid channel 205, and the first sealing member 204 is spaced apart from the inner wall 2051 of the fluid channel 205.

As an example, the first sealing member 204 is arranged on the valve core 203 along the circumferential edge of the valve core 203 by using a rubber-coated structure, the first sealing member 204 is in contact with the inner wall of the valve seat 202 and the inner wall of the valve body 201, and the ribs 2041 on the outer wall of the first sealing member 204 are also in contact with the inner wall of the valve seat 202, so that a better sealing effect can be achieved.

That is to say, the first sealing member 204 surrounds the valve core 203 and is integrally formed with the valve core 203 to enable a sealed connection between the valve core 203 and the valve seat 202 and the valve body 201. A plurality of ribs 2041 are provided on a side of the first sealing member 204 facing the inner wall of the fluid channel 205, the plurality of ribs 2041 are spaced apart in the circumferential direction, and the plurality of ribs 2041 all abut against the valve seat 202. In the first position, the plurality of ribs 2041 all abut against the inner wall 2051 of the fluid channel 205; and in the second position, the plurality of ribs 2041 are spaced apart from the inner wall 2051 of the fluid channel 205.

Similarly, the length and the number of the ribs 2041 are not limited in the embodiments of the present invention, and a plurality (one, two, three, four or five) of ribs 2041, etc. may be provided, and each rib may have a length of 1 mm, 2 mm, 3 mm, etc. preferably, the ribs 2041 are shorter or thinner, so that the friction force between the first sealing member 204 and the valve core 203 can be reduced, thus facilitating the turning of the valve core 203. Those skilled in the art should understand that the connector shown in Figs. 7A and 7C may also be used for the above air valve as shown in Figs. 10 and 11.

Those skilled in the art should understand that the valve cap 207 being connected to the valve seat by means of an internal or external thread provided at an end of the valve seat 202 does not affect the replacement of structures of the two types of valve cores 203 described above.

### Embodiment 2

Fig. 12 is a schematic perspective structural view of a structure of an air valve.

As an example, referring to Figs. 12 and 13, an outer periphery of the first main body portion 2021 protrudes outwardly to form a second abutting portion 2027; the second abutting portion 2027 axially extends in a direction close to the valve body 201 and is spaced apart from the first main body portion 2021 in a radial direction (i.e., direction Y shown in Fig. 13) to form an annular groove 2028, and the annular groove 2028 is configured to accommodate the valve body 201 and is in threaded fit with an outer wall of the valve body 201 to clamp the first sealing member 204 in the accommodating space 2022.

As an example, a projection of the second abutting portion 2027 in the axial direction comprises a first straight segment 2029, a first circular arc segment 2101, a second straight segment 2102, a third straight segment 2103, a second circular arc segment 2104 and a fourth straight segment 2105 that are connected to each other. The second abutting portion 2027 is of a shuttle-like structure. Fig. 13 is a schematic cross-sectional view of a valve cap being connected to a valve seat by a thread on the valve cap mating with an external thread provided at an end of the valve seat.

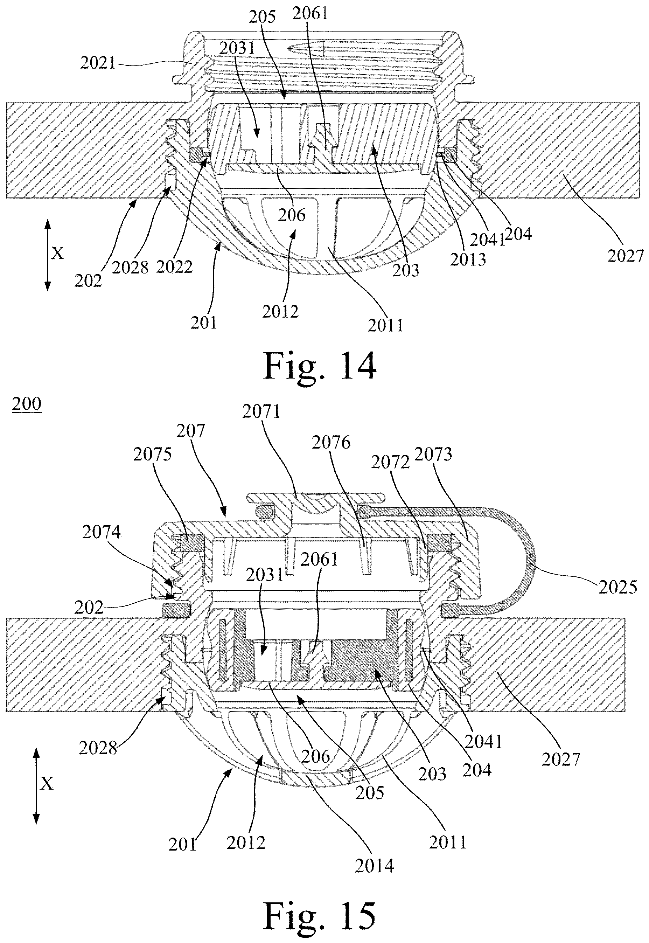

Fig. 15 is a schematic cross-sectional view of a valve cap being connected to a valve seat by a thread on the valve cap mating with an external thread provided at an end of the valve seat.

The seal ring (i.e., the first sealing member 204 described above) of the air valve is arranged on the valve core 203 along the circumferential edge of the valve core 203 by using a rubber-coated structure; the seal ring (i.e., the first sealing member 204 described above) is in contact with the inner wall of the valve seat 202 and the inner wall of the valve body 201. The ribs 2041 on the outer wall of the seal ring (i.e., the first sealing member 204 described above) are also in contact with the inner wall of the valve seat 202, so that a better sealing effect can be achieved.

Fig. 14 is a schematic cross-sectional view of a valve seat being connected to a valve body by means of threads.

The seal ring (i.e., the first sealing member 204 described above) is clamped between the valve seat 202 and the valve body 201 by means of the threaded connection between the valve seat 202 and the valve body 201, thus preventing the seal ring (i.e., the first sealing member 204 described above) form loosing or falling off, which would otherwise affect the sealing effect.

The ribs 2041 are arranged at the edge of the seal ring (i.e., the first sealing member 201 described above), and the ribs 2041 are in contact with a wall of the valve core 203, thereby achieving the sealing effect.

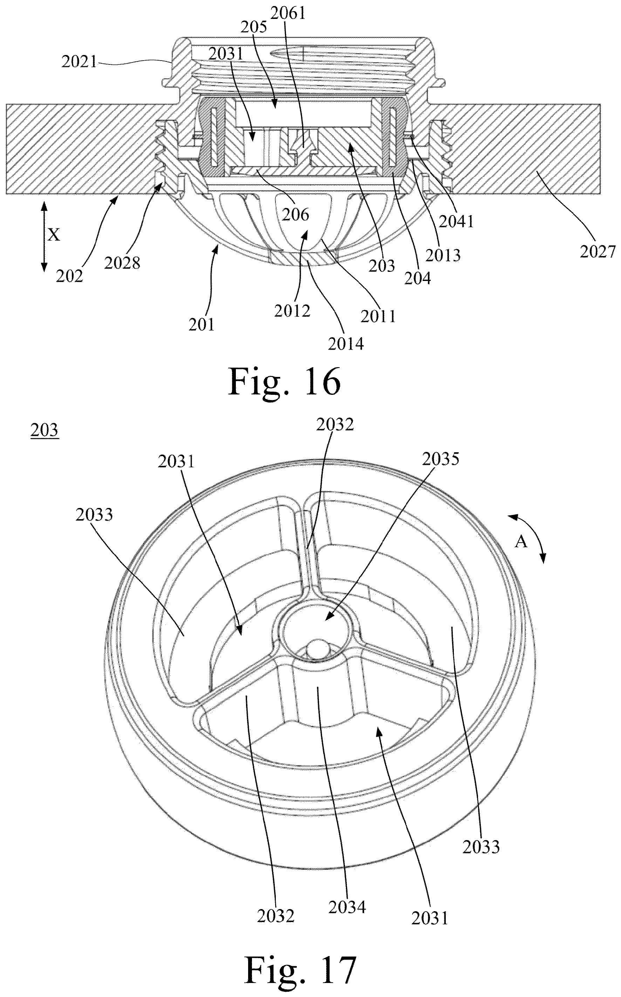

Fig. 16 is a schematic cross-sectional view of the valve seat shown in Fig. 15 being connected to a valve body by means of threads. The valve core is the valve core shown in Fig. 15.

Fig. 17 is a schematic structural diagram of a valve core.

The valve core 203 is provided with the air vents 2031 described above, and the air vents 2031 are divided into three equal parts in a fan shape. The air vents 2031 are arranged in a circumferential direction of the valve core 203 (i.e., direction A shown in Fig. 17), a continuous annular stopper 2033 or an intermittent annular stopper 2033 is arranged on an edge of each air vent 2031 to block the valve diaphragm 206 (shown in Fig. 16), effectively solving the problem of the valve diaphragm 206 being stuck in the air vent 2031 and failing to rebound during pressing of the valve core 203.

Preferably, the valve core 203 is provided with three baffle plates 2032, the three baffle plates 2032 are spaced apart in the circumferential direction (i.e., the direction A shown in Fig. 17) to form the air vents 2031. One end of each of the three baffle plates 2032 is connected to an inner wall of the valve core 203, and the other end thereof is connected to a third connecting portion 2034. The third connecting portion 2034 is provided with a through hole 2035, and the connecting rod 2061 passes through the through hole 2035 and is connected to the valve core 203.

The stopper 2033 may be integrally formed with or separated from the valve core 203. The stopper 2033 may also be arranged on an edge of the baffle plate 2032; a plurality (one, two, three, four, five or more) of stoppers 2033 may also be arranged thereon, and the specific number thereof is not limited.

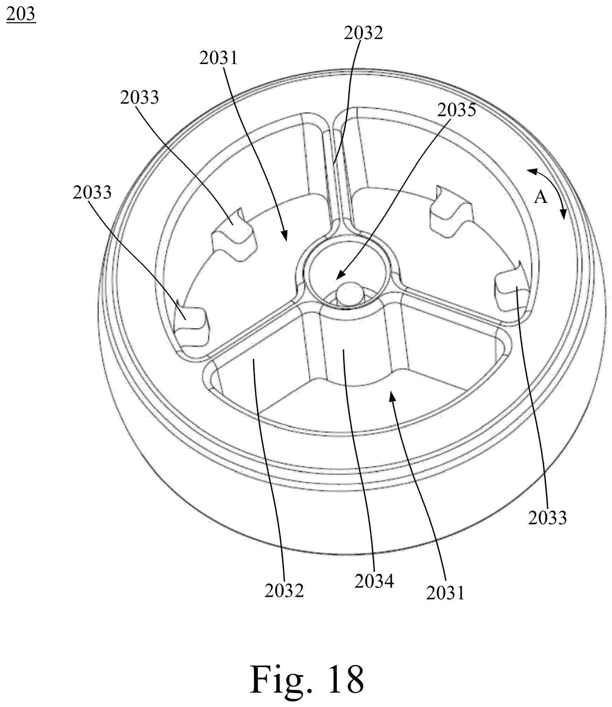

Fig. 18 is a schematic diagram of two separate stoppers being arranged on an edge of each air vent 2031 of a valve core.

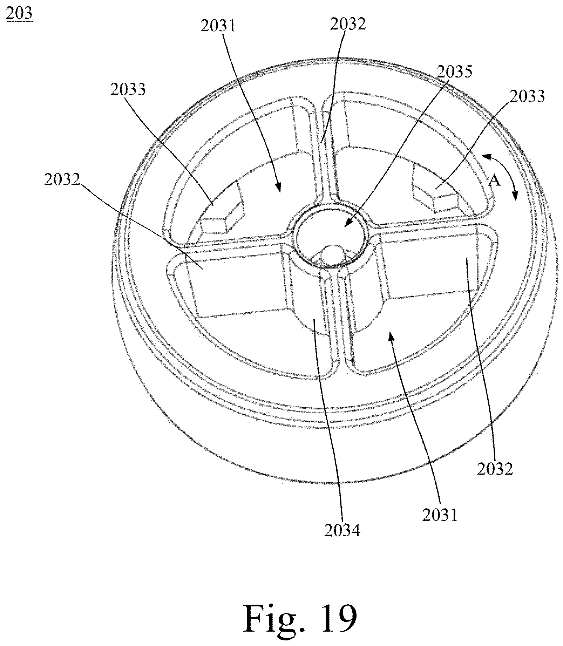

Fig. 19 shows that air vents 2031 of a valve core are divided into four equal parts in a fan shape. One separate stopper is arranged in each air vent 2031 of the valve core.

The number of stoppers 2033 arranged in the air vent 2031 of the valve core 203 is not limited, for example, a plurality (one, two, three, four, five or more) of stoppers 2033 may be provided in one air vent 2031, and the specific number thereof is not limited.

The shape of the stopper 2033 is also not limited, and the stopper 2033 may be an integral annular stopper 2033 as shown in Fig. 17, or a separate stopper as shown in Figs. 18 and 19, as long as the stopper can block the valve diaphragm 206 (shown in Fig. 16) from entering the air vent 2031. Specifically, the stopper 2033 may be in the shape of a protruding point, a rectangle, a circular arc, or a triangle.

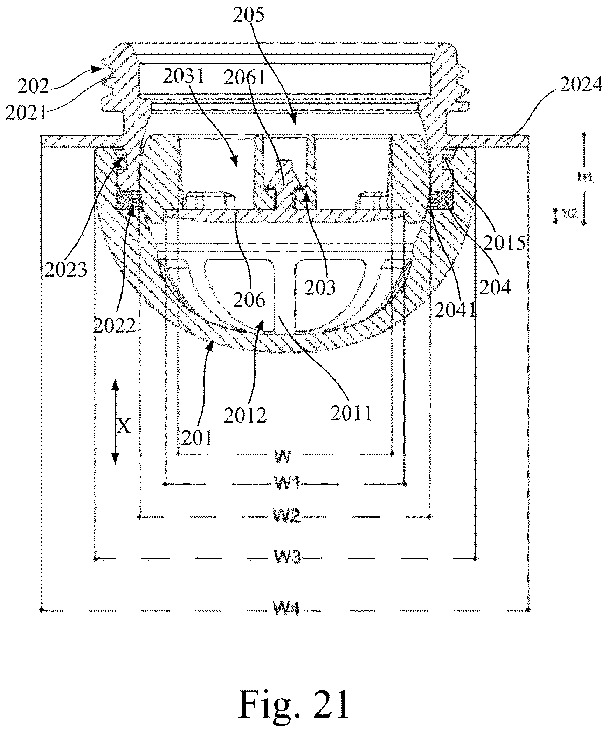

In conjunction with Fig. 21, the stopper 2033 is arranged at a bottom edge of the air vent 2031 or a bottom edge of the baffle plate 2032 in a height H1 direction of the valve core. Of course, the stopper 2033 may also be arranged at the middle or other positions of the air vent 2031 or the baffle plate 2032 in the height direction of the valve core 203, as long as the stopper can block the valve diaphragm 206 (shown in Fig. 16). That is to say, the stopper 2033 can be arranged at the bottom, middle or top of an inner wall of the air vent 2031 in an axial direction (i.e., direction X shown in Fig. 21).

Preferably, the stopper 2033 extends toward the through hole 2035 with a length of 1.5 mm to 4 mm and extends in the circumferential direction A with a width of 1.5 mm to 4 mm. Preferably, the length is 2 mm, and the width is 1.5 mm. Of course, the length and width of the stopper 2033 may also be larger or smaller, and specific values thereof are not limited.

The number and shape of the air vents 2031 described above are both not limited, and the air vents may be divided into three equal parts as shown in Fig. 18, or four equal parts as shown in Fig. 19 by the baffle plates 2032, or two, five or six equal parts, etc., by the baffle plates 2032.

Fig. 19 is a schematic structural diagram of the valve core shown in Fig. 5.

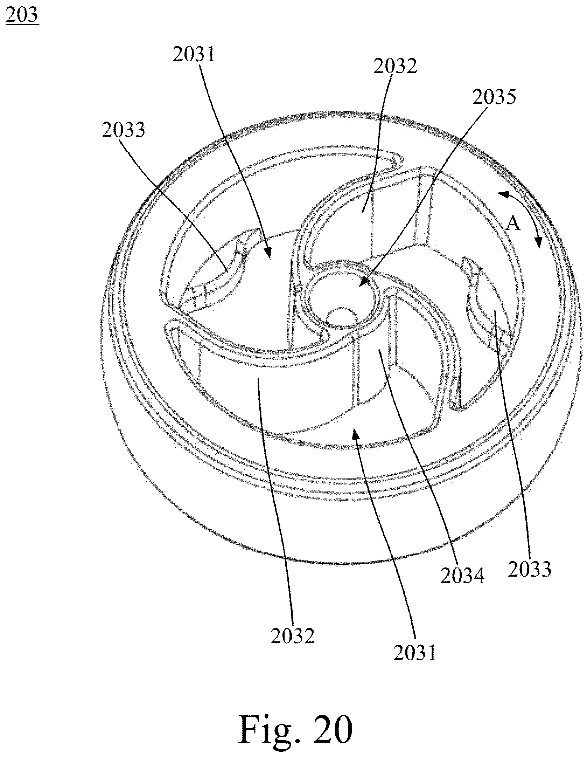

Fig. 20 is a schematic structural diagram of a valve core.

The baffle plate 2032 is arc-shaped, which can increase the contact area when pressing the valve core and can facilitate the pressing of the valve core. Of course, the baffle plate 2032 may also be a straight baffle plate as shown in the above figures.

The stopper 2033 is an annular block, one side of the stopper 2033 is connected to the inner wall of the air vent 2031, and the other side thereof extends toward the through hole 2035.

As an example, referring to Fig. 21, a maximum high-frequency outer diameter dimension W4 of the valve seat 202 of the air valve 200 is set in a range of 40 mm to 120 mm, which basically meets the requirements of the air valve 200 for TPU inflatable sponge mattresses involved in the market. Preferably, the maximum high-frequency outer diameter dimension W4 of the valve seat 202 of the air valve 200 is 55 mm (of course, it may also be in other value ranges between 40 mm and 120 mm, such as a range of 52 mm to 60 mm, or other specific values; currently, the maximum high-frequency outer diameter dimension of other valve seats 202 in the market is substantially about 55 mm; therefore, preferably, the dimension W4 may also be 52 mm, 53 mm, 54 mm, 56 mm, 57 mm, 58 mm, 59 mm, or 60 mm).

According to the maximum high-frequency outer diameter dimension of the air valve 200, a maximum outer diameter dimension W3 of the valve body 201 of the air valve 200 is set between 30 mm and 110 mm. Preferably, the outer diameter dimension W3 of the valve body 201 of the air valve 200 is 45 mm. Optionally, the outer diameter dimension W3 of the valve body 201 of the air valve 200 may also be in other ranges between 30 mm and 110 mm, such as a range of 40 mm to 52 mm, or other specific values. For example, the dimension W3 may also be 42 mm, 45 mm, 48 mm, or 52 mm.

According to the maximum high-frequency outer diameter dimension of the air valve 200, a maximum outer diameter dimension W2 of the valve core 203 of the air valve 200 is set between 20 mm and 100 mm. Preferably, the maximum outer diameter dimension W2 of the valve core 203 of the air valve 200 is 35 mm. Optionally, the maximum outer diameter dimension W2 of the valve core 203 of the air valve 200 may also be in other ranges between 20 mm and 100 mm, such as a range of 30 mm to 42 mm, or other specific values. For example, the dimension W2 may also be 32 mm, 35 mm, 38 mm, or 42 mm.

An outer diameter dimension W1 of the valve diaphragm 206 is set between 18 mm and 108 mm. Preferably, the outer diameter dimension W1 of the valve diaphragm 206 is 30 mm. Optionally, the outer diameter dimension W1 of the valve diaphragm 206 may also be in other ranges between 18 mm and 108 mm, such as a range of 27 mm to 40 mm, or other specific values. For example, the dimension W1 may also be 29 mm, 32 mm, 35 mm, 37 mm, or 40 mm.

According to the maximum high-frequency outer diameter dimension of the air valve 200, an inner diameter dimension W of the valve core 203 of the air valve 200 may be set between 16 mm and 96 mm, which can maximize the size of the air inlet/outlets. Preferably, the maximum inner diameter dimension W of the valve core 203 of the air valve 200 is 26 mm. Optionally, the maximum inner diameter dimension W of the valve core 203 of the air valve 200 may also be in other ranges between 16 mm and 96 mm, such as, a range of 24 mm to 37 mm, or other specific values. For example, the dimension W may also be 26 mm, 29 mm, 32 mm, 34 mm, or 37 mm.

A thickness dimension H1 of the valve core 203 of the air valve 200 is greater than or equal to 3 mm, and an outer circular arc surface of the valve core 203 and the airflow channel (i.e., the fluid channel 205 described above) composed of the valve seat 202 and the valve body 201 have a concentric circle structure, so that the smooth turning of the valve core 203 in the airflow channel (i.e., the fluid channel 205 described above) can be ensured, without causing discomfort phenomena such as jamming.

The valve diaphragm 206 has a thickness dimension H2 of 0.5 mm to 10 mm, which can ensure an opening/closing effect of the air vent 2031 of the air valve 200 to the greatest extent while meeting the sealing requirements of the valve core 203. Preferably, thickness dimension H2 of the valve diaphragm 206 is 1.2 mm (as described above).

In order to facilitate the operation of the valve core 203 of the air valve by the user, a force required to flip/turn the valve core 203 is less than 0.5 N, and preferably, 0.1 N, 0.15 N, 0.2 N, 0.25 N, 0.3 N, 0.4 N or 0.45 N.

Although the present invention has been illustrated and described with reference to some preferred implementations of the present invention, those of ordinary skill in the art should understand that the above contents are further detailed descriptions of the present invention with reference to the specific implementations, and it cannot be assumed that the specific implementations of the present invention are limited to these descriptions.

## Claims

1. An air valve (200), **characterized by** comprising:
a valve body (201);
a valve seat (202) connected to the valve body (201) to form a fluid channel (205);
a first sealing member (204) arranged between the valve body (201) and the valve seat (202); and
a valve core (203) comprising air vents (2031) in communication with the fluid channel (205), the valve core (203) being rotatably arranged in the fluid channel (205) relative to the valve seat (202) and being surrounded by the first sealing member (204), so as to switch the valve core (203) between a first position and a second position,
wherein in the first position, the valve core (203) is in contact with an inner wall (2051) of the fluid channel (205), and the first sealing member (204) is in contact with the valve core (203) and seals the valve core (203) against the inner wall (2051) of the fluid channel (205); and
in the second position, the valve core (203) is spaced apart from the inner wall (2051) of the fluid channel (205), and the first sealing member (204) surrounds the valve core (203) and is spaced apart from the valve core (203).

2. The air valve of claim 1, **characterized in that** at least one rib (2041) is provided on a side of the first sealing member (204) facing the valve core (203), and the at least one rib (2041) is spaced apart in a circumferential direction, wherein
in the first position, the at least one rib (2041) abuts against the valve core (203); and
in the second position, the at least one rib (2041) surrounds the valve core (203) and is spaced apart from the valve core (203).

3. The air valve of claim 1, **characterized in that** the valve core (203) is capable of 360-degree omnidirectional rotation within the fluid channel (205), enabling unrestricted multi-axis movement centered at a central axis (203a) of the valve core (203).

4. The air valve of claim 1, **characterized in that** an inner wall of the valve body (201) protrudes to form a first connecting portion (2013), and the valve seat (202) comprises a first main body portion (2021), wherein the first main body portion (2021) is internally hollow and is connected to the valve body (201) to form the fluid channel (205), the first main body portion (2021) extends in an axial direction, such that the first main body portion (2021) and the first connecting portion (2013) are arranged opposite each other and spaced apart in the axial direction and form an accommodating space (2022) together with the inner wall of the valve body (201), and the first sealing member (204) is located in the accommodating space (2022).

5. The air valve of claim 4, **characterized in that** a hook (2015) is provided at a top end of the inner wall of the valve body (201) in the axial direction, the hook (2015) and the first connecting portion (2013) are spaced apart in the axial direction, a mounting portion (2023) is provided on an outer wall of the first main body portion (2021), and the mounting portion (2023) is configured for connection to the hook (2015) in a snap-fit manner to connect the valve seat (202) to the valve body (201) and clamp the first sealing member (204) in the accommodating space (2022).

6. The air valve of claim 4, **characterized in that** an outer periphery of the first main body portion (2021) protrudes outwardly to form a first abutting portion (2024), and the first abutting portion (2024) is configured for connection to an inflatable main body (100); said first abutting portion (2024) being annular.

7. The air valve of claim 4, **characterized in that** an outer periphery of the first main body portion (2021) protrudes outwardly to form a second abutting portion (2027), the second abutting portion (2027) axially extends in a direction close to the valve body (201) and is spaced apart from the first main body portion (2021) in a radial direction to form an annular groove (2028), and the annular groove (2028) is configured to accommodate the valve body (201) and is in threaded fit with an outer wall of the valve body (201) to clamp the first sealing member (204) in the accommodating space (2022).

8. The air valve of claim 4, **characterized in that** a plurality of supports (2011) are provided on a side of the valve body (201) away from the valve seat (202), the plurality of supports (2011) are spaced apart in a circumferential direction to form a plurality of air outlet through holes (2012), and the plurality of air outlet through holes (2012) are in communication with the fluid channel (205).

9. The air valve of claim 8, **characterized in that** eight supports (2011) are provided, one end of each of the supports (2011) extends toward the valve seat (202) and is connected to the first connecting portion (2013), the other end thereof is connected by means of a second connecting portion (2014), and the second connecting portion (2014) is located at a bottom end of the valve body (201).

10. The air valve of claim 1, **characterized by** further comprising a valve cap (207), the valve cap (207) being threadedly connected to the valve seat (202).

11. The air valve of claim 10, **characterized in that** the valve cap (207) comprises a first portion (2072) and a second portion (2073), the first portion (2072) and the second portion (2073) being spaced apart in a radial direction to form a connecting groove (2074), and the connecting groove (2074) being configured to accommodate the valve seat (202) and being threadedly connected to the valve seat (202).

12. The air valve of claim 11, **characterized in that** the first portion (2072) is internally hollow and is in communication with the fluid channel (205), a plurality of reinforcing ribs (2076) is provided inside the first portion (2072), and the plurality of reinforcing ribs (2076) are spaced apart in a circumferential direction.

13. The air valve of claim 11, **characterized in that** a second sealing member (2075) is provided in the connecting groove (2074) to enable a sealed connection between the valve cap (207) and the valve seat (202).

14. The air valve of claim 1, **characterized in that** the valve core (203) is provided with a plurality of baffle plates (2032), the plurality of baffle plates (2032) are spaced apart in a circumferential direction to form the air vents (2031), one end of each of the plurality of baffle plates (2032) is connected to an inner wall of the valve core (203), and the other end thereof is connected to a third connecting portion (2034).

15. The air valve of claim 14, **characterized in that** at least a part of an inner wall of each air vent (2031) is provided with a stopper (2033), and the stopper (2033) extends toward the air vent (2031).

16. The air valve of claim 15, **characterized in that** the stopper (2033) is an annular block, one side of the stopper (2033) is connected to the inner wall of the air vent (2031), and the other side thereof extends toward the air vent (2031); or the stopper (2033) is arranged at the bottom, middle or top of the inner wall of the air vent (2031) in an axial direction; or the stopper (2033) is integrally formed with the valve core (203); or the stopper (2033) extends toward a through hole with a length of 1.5 mm to 4 mm and extends in the circumferential direction with a width of 1.5 mm to 4 mm; or **in that** a plurality of stoppers (2033) are provided, and the plurality of stoppers (2033) are spaced apart in the circumferential direction.

17. The air valve of claim 14, **characterized by** further comprising a valve diaphragm (206), wherein the valve diaphragm (206) is located on a side of the valve core (203) facing the valve body (201), and the valve diaphragm (206) is connected to the valve core (203) by means of a connecting rod (2061) and covers the air vents (2031); said connecting rod (2061) being connected to the valve core (203) passing through a through hole (2035) provided in the third connecting portion (2034).

18. The air valve of claim 17, **characterized in that** the valve seat (202) has an outer diameter of 40 mm to 120 mm, the valve body (201) has an outer diameter of 30 mm to 110 mm, the valve diaphragm (206) has an outer diameter of 18 mm to 108 mm, and the valve core (203) has an outer diameter of 20 mm to 100 mm and/or the valve core (203) has an inner diameter of 16 mm to 96 mm, the valve core (203) has a thickness of greater than 3 mm, and the valve diaphragm (206) has a thickness of 0.5 mm to 10 mm.

19. The air valve of claim 1, **characterized in that** a force for turning the valve core (203) to rotate relative to the valve seat (202) is less than 0.5 N.

20. An air valve assembly, **characterized by** comprising:
an air valve (200) of any one of claims 1-19; and
a connector (300) having a second channel (302) for a fluid to pass through, the fluid channel (205) being in communication with the second channel (302), one end of the connector (300) being connected to the valve seat (202), and the other end thereof being configured for connection to an external apparatus.

21. The air valve assembly of claim 20, **characterized in that** the connector (300) comprises a connector body (301), wherein the connector body (301) extends in an axial direction, and the connector body (301) is internally hollow to form the second channel (302); and the connector body (301) comprises a first end (303) and a second end (304) that are arranged opposite each other in the axial direction, the first end (303) being provided with a recess (305) for abutting against the external apparatus, and the second end (304) being provided with a thread and being threadedly connected to the valve seat (202).

22. The air valve assembly of claim 21, **characterized in that** a protruding portion (306) is provided on a side wall of the connector body (301) close to the second end (304), and the protruding portion (306) surrounds the side wall of the connector body (301) and is located at the top of the valve seat (202).

23. The air valve assembly of claim 20, **characterized in that** the connector (300) comprises a connector body (301) and a protruding portion (306), wherein the connector body (301) extends in an axial direction, and the connector body (301) is internally hollow to form the second channel (302); the connector body (301) comprises a first end (303) and a second end (304) that are arranged opposite each other in the axial direction, the first end (303) being configured for connection to the external apparatus to insert the external apparatus into the second channel (302), and the second end (304) being provided with a thread and being threadedly connected to the valve seat (202); and the protruding portion (306) surrounds an outer periphery of the first end (303) and is located at the top of the valve seat (202).

24. An inflatable product, **characterized by** comprising:
an inflatable main body (100) comprising an inflatable chamber (13); and
an air valve (200) of any one of claims 1-19, the valve seat (202) being connected to the inflatable main body (100) such that the valve body (201) is located in the inflatable chamber (13).
